# EUROPEAN PATENT APPLICATION

(11) **EP 4 661 465 A1**
(43) Date of publication of application: **10.12.2025**
(21) Application number: 24777939.0
(22) Date of filing: 22.03.2024
(51) Int. Cl.: H04W 16/28

(54) **COMMUNICATION METHOD, COMMUNICATION DEVICE, MEDIUM, AND PROGRAM PRODUCT**

(30) Priority: 27.03.2023 CN 202310350560
(71) Applicant: Huawei Technologies Co., Ltd., Shenzhen, Guangdong 518129 (CN)
(72) Inventor: SHI, Meng, Shenzhen, Guangdong 518129 (CN); ZHANG, Xiaoyu, Shenzhen, Guangdong 518129 (CN); BAI, Zhongjin, Shenzhen, Guangdong 518129 (CN); WEI, Jingxin, Shenzhen, Guangdong 518129 (CN); XUE, Jiantao, Shenzhen, Guangdong 518129 (CN); LIAO, Shuri, Shenzhen, Guangdong 518129 (CN); DOU, Shengyue, Shenzhen, Guangdong 518129 (CN)
(74) Representative: Pfenning, Meinig & Partner mbB
(86) International application number: PCT/CN2024/083405
(87) International publication number: WO 2024/199150

(57) **Abstract**

Embodiments of the present disclosure provide a communication method, a communication device, a computer-readable storage medium, and a computer program product. The communication method includes: A terminal device receives beam coverage information of a network device from the network device, where the beam coverage information is used to determine spatial coverage of a plurality of beams; the terminal device determines, from the spatial coverage of the plurality of beams, beam coverage in which the terminal device is located; and the terminal device performs radio resource management measurement based on the beam coverage. In this way, the terminal device obtains the beam coverage information from the network device, to determine, based on the beam coverage information, the beam spatial coverage in which the terminal device is located, implementing accurate radio resource management measurement.

## Description

This application claims priority to Chinese Patent Application No. 202310350560.9, filed with the China National Intellectual Property Administration on March 27, 2023 and entitled "COMMUNICATION METHOD, COMMUNICATION DEVICE, MEDIUM, AND PROGRAM PRODUCT", which is incorporated herein by reference in its entirety.

### TECHNICAL FIELD

The present disclosure generally relates to the communication field, and more specifically, to a communication method, a communication device, a computer-readable storage medium, and a computer program product.

### BACKGROUND

In a ground communication system, due to movement, a terminal performs access selection and handover between different base stations, and determining of a handover-related status may usually depend on mobility management. Mobility management mainly means a measurement procedure related to radio resource management (RRM) and a mobility signaling procedure triggered based on a measurement result. Currently, research on non-terrestrial network (Non-Terrestrial Network, NTN) coverage is underway, to further expand coverage and provide communication services for regions such as oceans and forests. Different from a ground base station, a network device serving as a base station in the NTN has a higher moving speed and a longer signal propagation distance, resulting in a greater signal path loss of the network device. A communication mechanism designed for a terminal device and a ground base station in a current mobile communication system cannot be directly applied to an NTN system.

In the NTN communication system, a UE needs to perform beam measurement for mobility management. Due to a large coverage area and a large quantity of beams of a satellite, an excessively long measurement time window significantly reduces measurement efficiency of the terminal, leading to a significant increase in power consumption overheads of the terminal. In addition, overheads of time-frequency resources occupied by the terminal also increase, greatly limiting data transmission of the terminal. Therefore, it is very important to design an efficient mobility management procedure for the NTN communication system.

### SUMMARY

Embodiments of this application provide a communication method, a communication device, and a computer-readable storage medium. In this way, the terminal device can obtain the beam coverage information from the network device, to determine, based on the beam coverage information, the beam spatial coverage in which the terminal device is located, implementing accurate radio resource management measurement.

According to a first aspect of this application, a communication method is provided. The method includes: A terminal device receives beam coverage information of a network device from the network device, where the beam coverage information is used to determine spatial coverage of a plurality of beams; the terminal device determines, from the spatial coverage of the plurality of beams, beam coverage in which the terminal device is located; and the terminal device performs radio resource management measurement based on the beam coverage. In this way, the terminal device determines, based on the beam coverage information, the beam spatial coverage in which the terminal device is located, further implementing accurate radio resource management measurement.

In some embodiments, the beam coverage information includes at least one of the following: a scanning sequence of the spatial coverage of the plurality of beams, a geographic region covered by the spatial coverage of the plurality of beams, a spatial filtering parameter of the spatial coverage of the plurality of beams, or shape information of the spatial coverage of the plurality of beams. Therefore, the terminal device can obtain a plurality of types of comprehensive spatial related information of the beam by using the beam coverage information, improving beam measurement accuracy.

In some embodiments, the beam coverage information includes at least one of the following: a beam coverage radius or a beam coverage diameter of the plurality of beams, a beam center point and/or a beam center angle of the plurality of beams, or beam coverage angle information of the plurality of beams. Therefore, the beam coverage information is represented in different forms, so that the terminal device can obtain a plurality of types of beam coverage information.

In some embodiments, the beam coverage radius or the beam coverage diameter, and the beam center point, and/or the beam center angle are determined with reference to the ground or a reference plane at a predetermined height. Therefore, a parameter has a plurality of reference planes, increasing flexibility of parameter representation.

In some embodiments, the coverage angle information includes at least one of the following: a beam coverage angle of the beam projected onto the ground, a beam coverage angle of the beam projected onto a reference plane at a predetermined height, or a beam angle of the beam present when the beam is sent from the network device. Therefore, the coverage angle information may be in different forms, and the terminal device can obtain the angle information more flexibly and accurately.

In some embodiments, in the beam coverage information, one of the plurality of beams or at least two of the plurality of beams are used as a granularity for arrangement. Therefore, delivering the beam coverage information by using a plurality of beams as a granularity reduces overheads for representing the beam coverage information.

In some embodiments, the terminal device further determines the beam coverage based on at least one of the following: a position of the terminal device, a satellite ephemeris associated with the network device, or a beam that is previously determined by the terminal device and that previously covers the terminal device. Therefore, the terminal device can refer to a plurality of types of information, to obtain more accurate beam coverage.

In some embodiments, performing the radio resource management measurement includes: The terminal device determines, based on the beam coverage, a covering beam that covers the terminal device; the terminal device determines at least one to-be-measured beam based on a beam scanning pattern of the network device and the covering beam; and performs the radio resource management measurement based on the at least one to-be-measured beam. Therefore, the terminal device can perform the radio resource management measurement based on the beam coverage information.

In some embodiments, determining the at least one to-be-measured beam includes: The terminal device receives a beam measurement time window configuration from the network device, where the measurement time window configuration indicates a measurement periodicity and duration, determined by the network device, for the radio resource management measurement performed by the terminal device; and the terminal device determines the at least one to-be-measured beam based on the beam scanning pattern of the network device, the covering beam, and the beam measurement time window configuration. Therefore, the beam is determined with reference to the beam measurement time window configuration, so that a measurement range can be further narrowed, and measurement overheads can be further reduced.

In some embodiments, the network device is a first network device, the beam coverage information is first beam coverage information, and the method further includes: The terminal device receives second beam coverage information of a second network device from the first network device. Therefore, the terminal device can obtain beam coverage information of a neighboring cell, to better select an optimal beam.

In some embodiments, the second beam coverage information includes indication information, where the indication information indicates whether the second beam coverage information is the same as the first beam coverage information. Therefore, the beam coverage information of the neighboring cell can be simplified, reducing signaling overheads.

In some embodiments, the beam coverage information includes a parameter related to a beam scanning pattern of the plurality of beams. Therefore, signaling of the beam coverage information is reduced.

In some embodiments, the parameter includes at least one of the following: shape information of the plurality of beams, a quantity of longer-side beams in a rectangular coverage region of the plurality of beams, a quantity of shorter-side beams in the rectangular coverage region, a quantity of beams per circle present when the beam scanning pattern is circular scanning, a quantity of beams on a side of a square present when the beam scanning pattern is square scanning, position information of a start beam, a scanning manner of the plurality of beams, or a beam coverage radius or a beam coverage diameter of the plurality of beams. Therefore, different scanning patterns can be represented by different parameters.

In some embodiments, based on determining that the parameter includes the beam coverage radius or the beam coverage diameter, the terminal device determines, based on the beam coverage radius or the beam coverage diameter, a to-be-measured beam; or based on determining that the parameter does not include the beam coverage radius or the beam coverage diameter, the terminal device determines the to-be-measured beam based on a beam selected in an access procedure. Therefore, the terminal device can determine the to-be-measured beam in different manners.

In some embodiments, the beam coverage information includes: indication information indicating whether a change between beams in the plurality of beams is in a gradual manner, where the gradual manner indicates a change between beams with adjacent beam numbers or between geographically adjacent beams. In this gradual manner, a second beam in the plurality of beams is represented by offset information relative to a center point of a first beam. Therefore, the beam coverage information can be delivered as a relative value or an absolute value, reducing signaling overheads.

In some embodiments, the beam coverage information is compressed based on mathematical cross-correlation between beams in the plurality of beams. Therefore, this reduces redundancy of the beam coverage information, and improves communication efficiency.

In some embodiments, the terminal device sends a measurement result of the radio resource management measurement to the network device. Therefore, the network device can perform beam switching based on the measurement result.

In some embodiments, the terminal device performs, based on the beam coverage, random access to the network device. Therefore, random access performance is improved.

In some embodiments, performing the random access includes: The terminal device determines, based on the beam coverage, a covering beam that covers the terminal device; and the terminal device sends a random access request to the network device on a random access occasion corresponding to the covering beam. Therefore, random access can be initiated on a resource corresponding to an optimal beam.

In some embodiments, performing the random access includes: The terminal device determines a plurality of beams corresponding to the beam coverage; and the terminal device sends a random access request to the network device on a plurality of random access occasions corresponding to the plurality of beams. Therefore, the terminal device can initiate the random access on resources corresponding to the plurality of beams, increasing a success rate of a random access procedure.

In some embodiments, the communication method further includes: If the covering beam fails when the random access request is initiated, the terminal device obtains a new covering beam. Therefore, this prevents the terminal device from selecting an incorrect resource for the random access due to a change in the optimal beam.

According to a second aspect of this application, a communication method is provided. The method includes: A network device determines beam coverage information of the network device, where the beam coverage information is used to determine spatial coverage of a plurality of beams; and the network device sends the beam coverage information to a terminal device. In this way, the terminal device can determine, based on the beam coverage information, the beam spatial coverage in which the terminal device is located, further implementing accurate radio resource management measurement.

In some embodiments, the beam coverage information includes at least one of the following: a scanning sequence of the spatial coverage of the plurality of beams, a geographic region covered by the spatial coverage of the plurality of beams, a spatial filtering parameter of the spatial coverage of the plurality of beams, or shape information of the spatial coverage of the plurality of beams. Therefore, a plurality of types of comprehensive spatial related information of the beam can be delivered, improving beam measurement accuracy.

In some embodiments, the beam coverage information includes at least one of the following: a beam coverage radius or a beam coverage diameter of the plurality of beams, a beam center point and/or a beam center angle of the plurality of beams, or beam coverage angle information of the plurality of beams. Therefore, the beam coverage information is represented in different forms, so that the terminal device can obtain a plurality of types of beam coverage information.

In some embodiments, the beam coverage radius or the beam coverage diameter, and the beam center point, and/or the beam center angle are determined with reference to the ground or a reference plane at a predetermined height. Therefore, a parameter has a plurality of reference planes, increasing flexibility of parameter representation.

In some embodiments, the coverage angle information includes at least one of the following: a beam coverage angle of the beam projected onto the ground, a beam coverage angle of the beam projected onto a reference plane at a predetermined height, or a beam angle of the beam present when the beam is sent from the network device. Therefore, the coverage angle information may be in different forms, and the terminal device can obtain the angle information more flexibly and accurately.

In some embodiments, in the beam coverage information, one of the plurality of beams or at least two of the plurality of beams are used as a granularity for arrangement. Therefore, delivering the beam coverage information by using a plurality of beams as a granularity reduces overheads for representing the beam coverage information.

In some embodiments, the communication method further includes: The network device determines, a beam measurement time window configuration, where the measurement time window configuration indicates a measurement periodicity and duration for radio resource management measurement performed by the terminal device; and the network device sends the beam measurement time window configuration to the terminal device. Therefore, the beam is determined with reference to the beam measurement time window configuration, so that a measurement range can be further narrowed, and measurement overheads can be further reduced.

In some embodiments, the network device is a first network device, the beam coverage information is first beam coverage information, and the method further includes: The first network device sends second beam coverage information of a second network device to the terminal device. Therefore, beam coverage information of a neighboring cell can be sent to the terminal device, to better select an optimal beam.

In some embodiments, the second beam coverage information includes indication information, where the indication information indicates whether the second beam coverage information is the same as the first beam coverage information. Therefore, the beam coverage information of the neighboring cell can be simplified, reducing signaling overheads.

In some embodiments, the beam coverage information includes a parameter related to a beam scanning pattern of the plurality of beams. Therefore, signaling of the beam coverage information is reduced.

In some embodiments, the parameter includes at least one of the following: shape information of the plurality of beams, a quantity of longer-side beams in a rectangular coverage region of the plurality of beams, a quantity of shorter-side beams in the rectangular coverage region, a quantity of beams per circle present when the beam scanning pattern is circular scanning, a quantity of beams on a side of a square present when the beam scanning pattern is square scanning, position information of a start beam, a scanning manner of the plurality of beams, or a beam coverage radius or a beam coverage diameter of the plurality of beams. Therefore, different scanning patterns can be represented by different parameters.

In some embodiments, the beam coverage information includes: indication information indicating whether a change between beams in the plurality of beams is in a gradual manner, where the gradual manner indicates a change between beams with adjacent beam numbers or between geographically adjacent beams. In this gradual manner, a second beam in the plurality of beams is represented by offset information relative to a center point of a first beam. Therefore, the beam coverage information can be delivered as a relative value or an absolute value, reducing signaling overheads.

In some embodiments, the beam coverage information is compressed based on mathematical correlation between beams in the plurality of beams. Therefore, this reduces redundancy of the beam coverage information, and improves communication efficiency.

In some embodiments, the network device receives a measurement result of the radio resource management measurement from the terminal device; and the network device sends, to the terminal device based on the measurement result, an indication of performing beam switching. Therefore, performance of the radio resource management measurement can be improved.

In some embodiments, the network device receives a random access request from the terminal device, where the random access request is transmitted on a random access occasion that corresponds to one or more beams corresponding to the beam coverage. Therefore, a success rate of a random access procedure can be increased.

According to a third aspect of this application, a communication apparatus is provided. The communication apparatus includes a processor and a memory that stores instructions. When the instructions are executed by the processor, the communication apparatus is enabled to perform any method according to any one of the first aspect and the second aspect and the implementations thereof. According to a fourth aspect of this application, a computer-readable storage medium is provided. The computer-readable storage medium stores instructions, and when the instructions are executed by an electronic device, the electronic device is enabled to perform any method according to any one of the first aspect and the second aspect and the implementations thereof.

According to a fifth aspect of this application, a chip is provided. The chip includes a processing circuit, configured to perform any method according to any one of the first aspect and the second aspect and the implementations thereof.

According to a sixth aspect of this application, a computer program product is provided. The computer program product includes instructions, and when the instructions are executed by an electronic device, the electronic device is enabled to perform any method according to any one of the first aspect and the second aspect and the implementations thereof.

It should be understood that the content described in the summary is not intended to limit key or important features of this application or limit the scope of this application. The following descriptions facilitate understanding of other features of this application.

### BRIEF DESCRIPTION OF DRAWINGS

FIG. 1A is a diagram of a communication system in which an embodiment of the present disclosure may be implemented;
FIG. 1B is a diagram of an architecture of a communication system related to an embodiment of the present disclosure;
FIG. 1C is a diagram of NTN transparent payload transmission related to an embodiment of the present disclosure;
FIG. 1D is a diagram of NTN regenerative payload transmission related to an embodiment of the present disclosure;
FIG. 2 is an interaction signaling diagram of NTN beam measurement according to some embodiments of the present disclosure;
FIG. 3 is a diagram of an example of beam coverage information according to some embodiments of the present disclosure;
FIG. 4 is a diagram of another example of beam coverage information according to some embodiments of the present disclosure;
FIG. 5 is a diagram of still another example of beam coverage information according to some embodiments of the present disclosure;
FIG. 6 is a diagram in which a terminal device performs initial access according to some embodiments of the present disclosure;
FIG. 7 is a diagram of beam projection according to some embodiments of the present disclosure;
FIG. 8 is a diagram of an earth-fixed scenario in which some embodiments of the present disclosure may be implemented;
FIG. 9 is a diagram of an earth-moving scenario in which some embodiments of the present disclosure may be implemented;
FIG. 10 is a diagram of beam scanning according to some embodiments of the present disclosure;
FIG. 11 is another diagram of beam scanning according to some embodiments of the present disclosure;
FIG. 12 is a schematic flowchart of a method implemented by a terminal device according to an embodiment of the present disclosure;
FIG. 13 is a schematic flowchart of a method implemented by a network device according to an embodiment of the present disclosure;
FIG. 14 is a simplified block diagram of an example device in a possible implementation according to an embodiment of this application; and
FIG. 15 is a simplified block diagram of an example device in a possible implementation according to an embodiment of this application.

Throughout all the accompanying drawings, same or similar reference numerals represent same or similar components.

### DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In the descriptions of embodiments of the present disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. The following may further include other explicit and implied definitions.

Embodiments of the present disclosure may be implemented according to any appropriate communication protocol, including but not limited to cellular communication protocols such as 3rd generation (3rd Generation, 3G), 4th generation (4G), 5th generation (5G), and future communication protocols (for example, 6th generation (6G)), wireless local area network communication protocols such as the Institute of Electrical and Electronics Engineers (Institute of Electrical and Electronics Engineers, IEEE) 802.11, and/or any other protocols currently known or developed in future.

Technical solutions in embodiments of the present disclosure are applied to a communication system that complies with any proper communication protocol, for example, a general packet radio service (General Packet Radio Service, GPRS) system, a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications Service, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronization Code Division Multiple Access, TD-SCDMA) system, a frequency division duplex (Frequency Division Duplex, FDD) system, a time division duplex (Time Division Duplex, TDD) system, a 5th generation (5G) system (for example, a new radio (New Radio, NR) system), and a future communication system (for example, a 6th generation (6G) system).

For the purpose of illustration, the following describes embodiments of the present disclosure in the context of a 5G communication system in 3GPP. However, it should be understood that embodiments of the present disclosure are not limited to the communication system, but may be applied to any communication system having a similar problem, for example, a wireless local area network (WLAN), a wired communication system, or another communication system developed in the future.

The term "terminal" or "terminal device" used in the present disclosure means any terminal device that can perform wired or wireless communication with a network device or any terminal devices that can perform wired or wireless communication with each other. The terminal device may be sometimes referred to as a user equipment or a UE. The terminal device may be any type of mobile terminal, fixed terminal, or portable terminal. The terminal device may be various wireless communication devices that have a wireless communication function. With emergence of an Internet of Things (Internet of Things, IOT) technology, more devices that previously have no communication function, for example without limitation to, a household appliance, a transportation tool, a tool device, a service device, and a service facility, start to obtain a wireless communication function by being configured with wireless communication units, to access a wireless communication network, and accept remote control. Devices of this type have a wireless communication function because the devices are configured with wireless communication units. Therefore, the devices of this type also belong to a scope of wireless communication devices. For example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an Internet node, a communicator, a desktop computer, a laptop computer, a notebook computer, a tablet computer, a personal communication system device, a personal navigation device, a personal digital assistant (Personal Digital Assistant, PDA), a wireless data card, a wireless modem (Modulator demodulator, Modem), a positioning device, a radio broadcast receiver, an e-book device, a game device, an IoT device, a vehicle-mounted device, an aircraft, a virtual reality (Virtual Reality, VR) device, an augmented reality (Augmented Reality, AR) device, a wearable device (for example, a smartwatch), a terminal device in a 5G network or any terminal device in an evolved public land mobile network (Public Land Mobile Network, PLMN), another device that can be used for communication, or any combination thereof.

The term "network node" or "network device" used in the present disclosure is an entity or a node that may be configured to communicate with a terminal device, for example, may be an access network device. The access network device may be an apparatus that is deployed in a radio access network and that provides a wireless communication function for a mobile terminal. For example, the access network device may be a radio access network (Radio Access Network, RAN) network device. The access network device may include various types of base stations. The base station is configured to provide a wireless access service for the terminal device. Specifically, each base station corresponds to a service coverage region, and a terminal device entering the region may communicate with the base station by using a radio signal, to receive a radio access service provided by the base station. The service coverage regions of the base stations may overlap, and a terminal device in an overlapping region may receive radio signals from a plurality of base stations. Therefore, the plurality of base stations may simultaneously provide services for the terminal device. Based on a size of a provided service coverage region, the access network device may include a macro base station for providing a macro cell (Macro cell), a micro base station for providing a micro cell (micro cell), a pico base station for providing a pico cell, and a femto base station for providing a femto cell (Femto cell). In addition, the access network device may further include various forms of relay stations, access points, remote radio units (Remote Radio Unit, RRU), radio frequency heads (Radio Head, RH), remote radio heads (Remote Radio Head, RRH), and the like. In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in the 5G network. In some implementations, the access network device may include a satellite or an unmanned aerial vehicle platform, and may be used in, for example, scenarios such as a low earth orbit (low earth orbit, LEO), a medium earth orbit (medium earth orbit, MEO), or a geostationary earth orbit (Geostationary Earth Orbit, GEO)/an unmanned aircraft system (Unmanned Aircraft System, UAS). For ease of description, in subsequent embodiments of the present disclosure, the foregoing apparatuses that provide a wireless communication function for the mobile terminal are collectively referred to as a network device. This is not specifically limited in embodiments of the present disclosure.

In a ground communication system, due to movement, a terminal performs access selection and handover between different base stations, and determining of a handover-related status may usually depend on mobility management. Mobility management mainly means a measurement procedure related to radio resource management (Radio Resource Management, RRM) and a mobility signaling procedure triggered based on a measurement result. During the mobility management, a base station or a network side delivers an RRM measurement task to the terminal, including two basic measurement configurations.
- Measurement object: specifies a frequency band for measurement, a form of a reference signal, a time domain position of a to-be-measured reference signal, and the like.
- Measurement reporting: specifies a condition for triggering measurement, a manner for reporting a measurement result, and the like.

In an NR system, there are mainly two types of reference signals that can be used for RRM measurement: a synchronization signal block (Synchronization Signal and PBCH Block, SS/PBCH Block, SSB) and a channel state information reference signal (Channel State Information Reference Signal, CSI-RS). In some embodiments of the present disclosure, SSB-based mobility management is mainly described. However, it should be understood that embodiments of the present disclosure are not limited to the SSB-based mobility management, but are also applicable to CSI-RS-based mobility management or another similar mobility management solution.

During RRM measurement, if SSBs of two measurement cells have a same center frequency and a same subcarrier spacing, measurement between the two cells is referred to as intra-frequency measurement; if SSBs of two measurement cells do not have a same center frequency or a same subcarrier spacing, measurement between the two cells is referred to as inter-frequency measurement. For the SSB-based mobility management, because SSBs are not contiguous in time domain in most cases, when performing measurement, the terminal does not need to continuously search for and measure the SSBs in time domain, but only needs to perform an operation in a time window in which these SSBs can be locked. Therefore, a concept of an SSB measurement time window (SS/PBCH Block Measurement Time Configuration, SMTC) is introduced in a measurement configuration delivered by a network side in an NR protocol. The SMTC is configured at intervals based on a specific periodicity (a minimum periodicity is 5 ms, and a maximum periodicity is 160 ms) in time domain. A measurement window of the SMTC maintains fixed duration (minimum duration is 1 ms, and maximum duration is 5 ms). From a measurement perspective, the terminal searches for and measures the SSBs only in the measurement window of the SMTC, and considers that an SSB outside the SMTC does not exist. The network side configures one SMTC for each SSB measurement frequency. For intra-frequency measurement, SSBs that need to be measured in a plurality of cells are included in the SMTC, and the SMTC is delivered by a network side of the serving cell to the terminal. In addition, for a specific cell on the SSB frequency, the network side may further configure another SMTC with a shorter periodicity, but measurement window duration of the two SMTCs needs to be consistent.

In R17, an NTN is included in a 3GPP (3rd Generation Partnership Project) scope. NTN coverage is used to further expand coverage. A satellite is used as an example. Because the satellite has advantages such as being less susceptible to natural disasters or external damage, research on using the satellite as an access network device (for example, a base station) of a mobile communication system is underway, to provide communication services for regions such as oceans and forests. Different from a ground base station, the satellite has a higher moving speed and a longer signal propagation distance, resulting in a greater signal path loss of the satellite used as a base station. A communication mechanism designed for a terminal device and a ground base station in a current mobile communication system cannot be directly applied between the terminal device and a satellite base station.

Compared with a ground communication system, a satellite communication system features a wider single satellite coverage area, a greater transmission loss, and a higher moving speed. Different from the ground system that can cover a single base station service area with a maximum of 8 SSB (FR1) beams or 64 SSB (FR2) beams, the satellite communication system may require hundreds or even thousands of SSB beams. For example, in a satellite communication system at an orbit altitude of 600 km, a single satellite can serve an area of hundreds of thousands of square kilometers. To overcome impact of a path loss caused by a transmission distance and ensure communication service quality, the satellite usually uses a large-scale antenna array to provide a higher array gain. However, this also results in a narrower main lobe of the beam. For example, a coverage radius of a 3 dB beamwidth is only 10-plus kilometers, and a coverage area is about hundreds of square kilometers. Then, thousands of beams are required to implement seamless coverage of a single satellite service area using narrow beams. Further, even if specific widening is performed on the beams, to ensure a gain level, hundreds of beams are needed to implement coverage.

In a satellite communication system, because a LEO satellite moves at a high speed, and the terminal may frequently hand over between a plurality of satellites, mobility management is particularly important. A satellite has a large coverage area and a large quantity of beams. Too many SSB beams of the satellite significantly prolong a time for the terminal to search for and measure the SSBs in mobility management. Further, because distances from a serving satellite and an adjacent satellite to the terminal are different, delays for SSB transmission to the terminal are also different. To ensure that the SMTC may include SSB measurement of the serving satellite and the adjacent satellite, longer measurement window duration needs to be configured. However, excessively long SMTC window duration significantly reduces measurement efficiency of the terminal. Power consumption overheads for continuous SSB search by the terminal significantly increase. In addition, overheads of time-frequency resources occupied by the terminal for SSB measurement also increase, greatly limiting data transmission of the terminal. Therefore, it is very important to design an efficient SSB-based mobility management procedure for the satellite communication system. It should be understood that embodiments of the present disclosure are not limited to either an SSB or a satellite scenario. The satellite scenario is only one of application scenarios, and embodiments are still applicable to future evolution of 6G.

The following further describes in detail this application with reference to accompanying drawings. Specific operation methods, function descriptions, and the like in method embodiments may also be applied to apparatus embodiments or system embodiments.

As mentioned above, there are still some problems to be resolved in beam measurement of an NTN communication system, for example, how to design an SSB measurement method for an NTN network that is applied to local cell and neighboring cell measurement, to implement position-based accurate measurement.
- In a measurement configuration manner in a conventional technology, a UE side does not sense an SSB arrangement pattern. Configuration on the network side is not flexible, leading to measurement redundancy and increased overheads for UE measurement.
- Another problem is how to further simplify and compress signaling to reduce signaling overheads of an SSB measurement configuration. After the UE side senses SSB scanning information, more accurate position-based measurement can be implemented. However, when the SSB scanning information of the network side is delivered, signaling overheads are excessively high. How to further simplify and compress the signaling to reduce the signaling overheads of the configuration is a problem to be resolved.

In view of this, an embodiment of the present disclosure provides a communication method. The method includes: A terminal device receives beam coverage information of a network device from the network device, where the beam coverage information is used to determine spatial coverage of a plurality of beams; the terminal device determines, from the spatial coverage of the plurality of beams, beam coverage in which the terminal device is located; and the terminal device performs radio resource management measurement based on the beam coverage.

In this way, the terminal device receives the beam coverage information from the network device, to determine, based on the beam coverage information, the beam spatial coverage in which the terminal device is located, implementing accurate beam measurement.

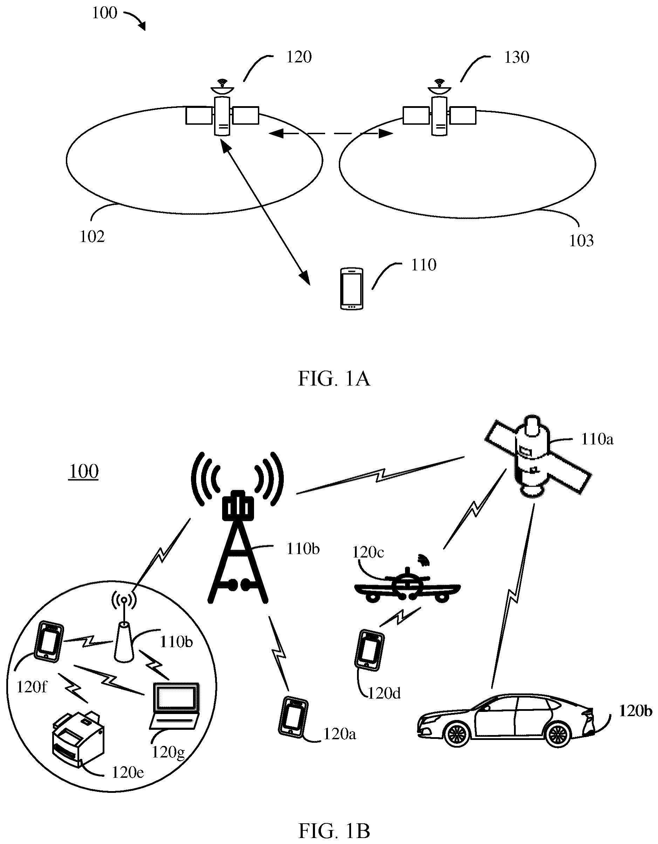

FIG. 1A is a diagram of a communication system 100 in which an embodiment of the present disclosure may be implemented. As shown in FIG. 1A, the system 100 may include a terminal device 110, a network device 120, and a network device 130. The terminal device may communicate with the network device 120 in coverage 102 of the network device 120. Similarly, the terminal device may communicate with the network device 130 in coverage 103 of the network device 130. A link from the terminal device 110 to the network device 120 is an uplink, and a link from the network device 120 to the terminal device 110 is referred to as a downlink.

It should be understood that quantities of terminal devices and network devices shown in FIG. 1A are merely used as an example. There may be more or fewer terminal devices and network devices. This is not limited in the present disclosure.

In addition, it should be understood that the communication system 100 may be used in various scenarios. For example, an application scenario of the communication system 100 includes but is not limited to an LTE system, a 5G system, a new radio (New Radio, NR) system, and a future communication system, like a 6th generation mobile communication system. This is not limited in embodiments of the present disclosure. In addition, it should also be understood that the foregoing communication may comply with any appropriate communication technology and a corresponding communication standard.

FIG. 1B is a diagram of an architecture of a communication system 100 related to an embodiment of the present disclosure. As shown in FIG. 1B, the communication system 100 may include at least one terminal (110a to 110g in FIG. 1B), and may further include at least one access network device (120a, 120b, and 120c in FIG. 1B). Access network devices may be connected to each other in a wired or wireless manner. FIG. 1B is merely a diagram. The communication system may further include another network device, for example, may further include a wireless relay device and a wireless backhaul device. In an NTN network, a satellite may implement transparent payload (Transparent Payload) transmission or regenerative payload (Regenerative Payload) transmission.

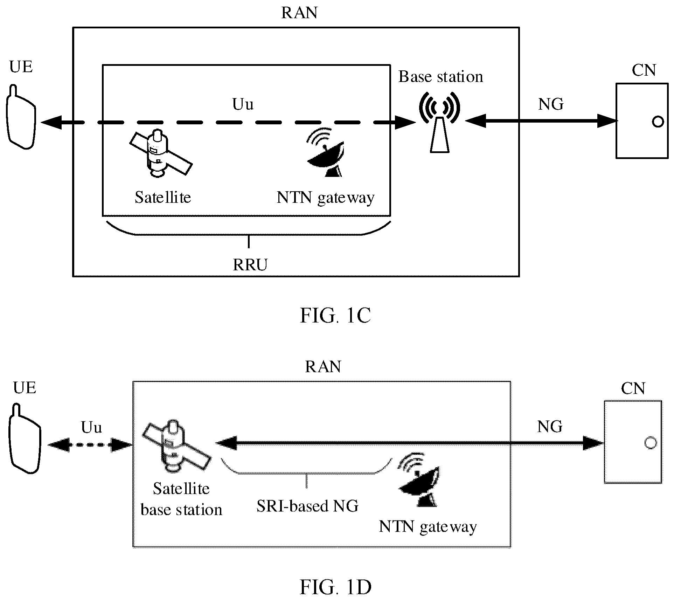

FIG. 1C is a diagram of NTN transparent payload transmission related to an embodiment of the present disclosure. As shown in FIG. 1C, the communication system may include at least one user equipment 110f, and may further include at least one network device, for example, a satellite 120d, an NTN gateway 120e, a base station 120f, or a core network (Core Network, CN) 120g. The user equipment 110f communicates with the ground base station 120f over a universal terrestrial radio access network-user (Universal Terrestrial Radio Access Network-User, Uu) interface. The satellite 120d may implement transparent payload transmission between the user equipment 110f and the ground base station 120f. The satellite 120d and the NTN gateway 120e may be considered as remote radio units (Remote Radio Units) of the ground base station 120f to implement transparent forwarding of a signal. That is, the satellite 120d supports only functions such as radio frequency filtering, and frequency conversion and amplification, and a signal waveform remains unchanged. Forwarding of the satellite 120d is transparent to the user equipment. The ground base station 120f may communicate with the core network 120g over a next generation network (Next Generation, NG) interface, and exchange, over the NG interface, non-access stratum (Non-Access Stratum, NAS) signaling of the core network and service data of the UE.

FIG. 1D is a diagram of NTN regenerative payload transmission related to an embodiment of the present disclosure. As shown in FIG. 1D, the communication system may include at least one user equipment 110g, and may further include at least one network device, for example, a satellite 120h, an NTN gateway 120i, a base station 120j, or a core network (Core Network, CN) 120k. The satellite 120h has some or all functions of an access network device, and may be referred to as a satellite base station. The satellite 120h may provide a wireless access service, and schedule a radio resource for a terminal device that accesses a network by using the satellite base station. The satellite base station communicates with the user equipment 110g over a Uu interface. The satellite base station may communicate with the CN 120k over an NG interface, and the satellite base station and the core network 120k may exchange, over the NG interface, NAS signaling and service data of the UE. A satellite radio interface (satellite radio interface, SRI) is a feeder link between an NTN gateway and the satellite. In FIG. 1D, the SRI interface may be used as a part of the NG interface to implement communication and interaction between the satellite 120h and the core network 120k.

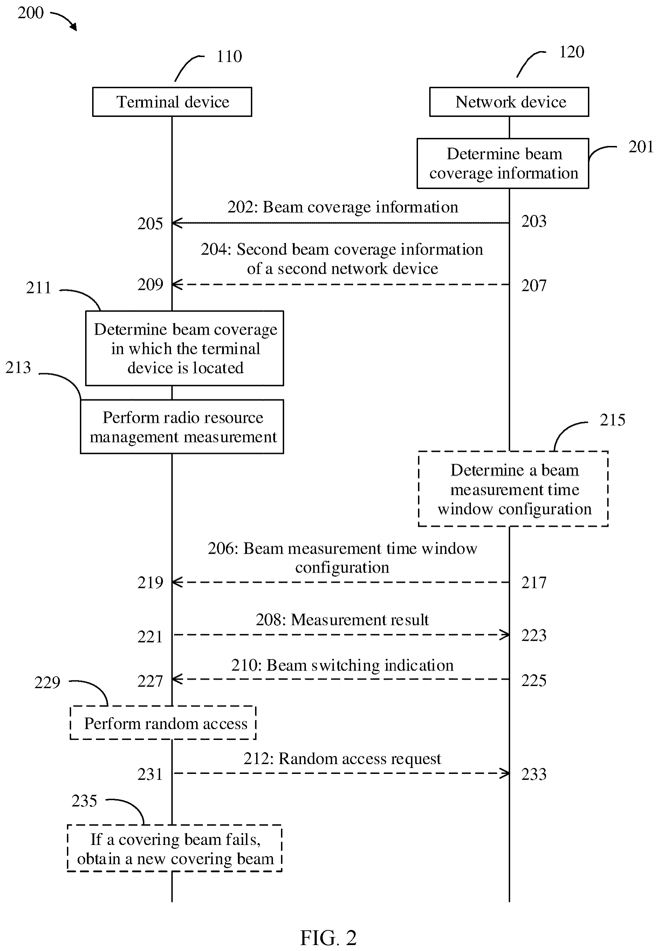

FIG. 2 is an interaction signaling diagram of NTN beam measurement according to some embodiments of the present disclosure. For clarity of discussion without any limitation, a process 200 is discussed with reference to FIG. 1A.

In the process 200, the network device 120 determines 201 beam coverage information of the network device, where the beam coverage information is used to determine spatial coverage of a plurality of beams, and then, the network device 120 sends 203 the beam coverage information 202 to the terminal device 110.

In some embodiments, the beam coverage information may include one or more of the following: a scanning sequence of the spatial coverage of the plurality of beams, a geographic region covered by the spatial coverage of the plurality of beams, a spatial filtering parameter of the spatial coverage of the plurality of beams, or shape information of the spatial coverage of the plurality of beams.

In some embodiments, the beam coverage information may include one or more of the following: a beam coverage radius or a beam coverage diameter of the plurality of beams, a beam center point and/or a beam center angle of the plurality of beams, or beam coverage angle information of the plurality of beams.

In some embodiments, the coverage angle information may include one or more of the following: a beam coverage angle of the beam projected onto the ground, a beam coverage angle of the beam projected onto a reference plane at a predetermined height, and/or a beam angle or a beamwidth angle of the beam present when the beam is sent from the network device.

In some embodiments, the beam coverage information may include a parameter related to a beam scanning pattern of the plurality of beams. In some embodiments, the parameter related to the beam scanning pattern may include one or more of the following: shape information of the plurality of beams, a quantity of longer-side beams in a rectangular coverage region of the plurality of beams, a quantity of shorter-side beams in the rectangular coverage region, a quantity of beams per circle present when the beam scanning pattern is circular scanning, a quantity of beams on a side of a square present when the beam scanning pattern is square scanning, position information of a start beam, a scanning manner of the plurality of beams, or a beam coverage radius or a beam coverage diameter of the plurality of beams.

In some embodiments, the network device 120 is a first network device, and the beam coverage information is first beam coverage information. The first network device may send 205 second beam coverage information 204 of a second network device to the terminal device 110.

As shown in FIG. 2, the terminal device 110 receives 203 the beam coverage information 202 of the network device 120 from the network device 120, where the beam coverage information 202 is used to determine spatial coverage of a plurality of beams.

In some embodiments, the terminal device 110 may further determine the beam coverage based on one or more of the following: a position of the terminal device, a satellite ephemeris associated with the network device, or a beam that is previously determined by the terminal device and that previously covers the terminal device.

As shown in FIG. 2, in the process 200, the terminal device 110 determines 211, from the spatial coverage of the plurality of beams, beam coverage in which the terminal device 110 is located.

In some embodiments, based on determining that the parameter includes the beam coverage radius or the beam coverage diameter, the terminal device 110 determines a to-be-measured beam based on the beam coverage radius or the beam coverage diameter. Based on determining that the parameter does not include the beam coverage radius or the beam coverage diameter, the terminal device 110 determines the to-be-measured beam based on a beam selected in an access procedure.

In the process 200, the terminal device 110 performs 213 radio resource management measurement based on the beam coverage. In some embodiments, performing the radio resource management measurement includes: The terminal device 110 determines, based on the beam coverage, a covering beam 211 that covers the terminal device; the terminal device determines at least one to-be-measured beam based on a beam scanning pattern of the network device and the covering beam; and performs the radio resource management measurement based on the at least one to-be-measured beam.

As shown in FIG. 2, the network device 120 determines 215 a beam measurement time window configuration 206, where the measurement time window configuration indicates a measurement periodicity and duration for radio resource management measurement performed by the terminal device 110. Then, the network device 120 sends 217 the beam measurement time window configuration 206 to the terminal device 110.

In some embodiments, determining the at least one to-be-measured beam includes: The terminal device 110 receives 219 a beam measurement time window configuration 206 from the network device 120, where the measurement time window configuration indicates a measurement periodicity and duration, determined by the network device, for the radio resource management measurement performed by the terminal device; and the terminal device 110 determines the at least one to-be-measured beam based on the beam scanning pattern of the network device 120, the covering beam, and the beam measurement time window configuration.

In some embodiments, the terminal device 110 sends 221 a measurement result 208 of the radio resource management measurement to the network device 120. After receiving 223 the measurement result 208 of the radio resource management measurement from the terminal device 110, the network device 120 sends 225, to the terminal device 110 based on the measurement result 208, an indication 210 of performing beam switching. Correspondingly, the terminal device 110 receives 227 the indication 210 of performing beam switching.

As shown in FIG. 2, the terminal device 110 performs, based on the beam coverage, random access 229 to the network device. In some embodiments, performing the random access includes: The terminal device 110 determines, based on the beam coverage, a covering beam that covers the terminal device 110; and the terminal device 110 sends 231 a random access request 212 to the network device 120 on a random access occasion corresponding to the covering beam.

In some embodiments, performing the random access includes: The terminal device determines a plurality of beams corresponding to the beam coverage; and the terminal device sends 231 a random access request 212 to the network device 120 on a plurality of random access occasions corresponding to the plurality of beams.

In some embodiments, if the covering beam fails when the random access request is initiated, the terminal device obtains 235 a new covering beam.

In some embodiments, the network device 120 receives 219 a random access request 212 from the terminal device 110, where the random access request is transmitted on a random access occasion that corresponds to one or more beams corresponding to the beam coverage.

In this way, the terminal device obtains the beam coverage information from the network device, to determine, based on the beam coverage information, the beam spatial coverage in which the terminal device is located, implementing accurate radio resource management measurement.

To understand the present disclosure more thoroughly, the following describes Embodiment 1 with reference to FIG. 2. It should be noted that each part of content in Embodiment 1 may be used independently or randomly combined with content in another embodiment, and is merely used as an example but not intended to limit the protection scope of the present disclosure.

### Embodiment 1

In Embodiment 1, a network device delivers beam coverage information, and a terminal device restores the beam coverage information, so that the terminal device can determine beam coverage in which the terminal device is located, implementing accurate SSB measurement. Specific steps and procedures are as follows.

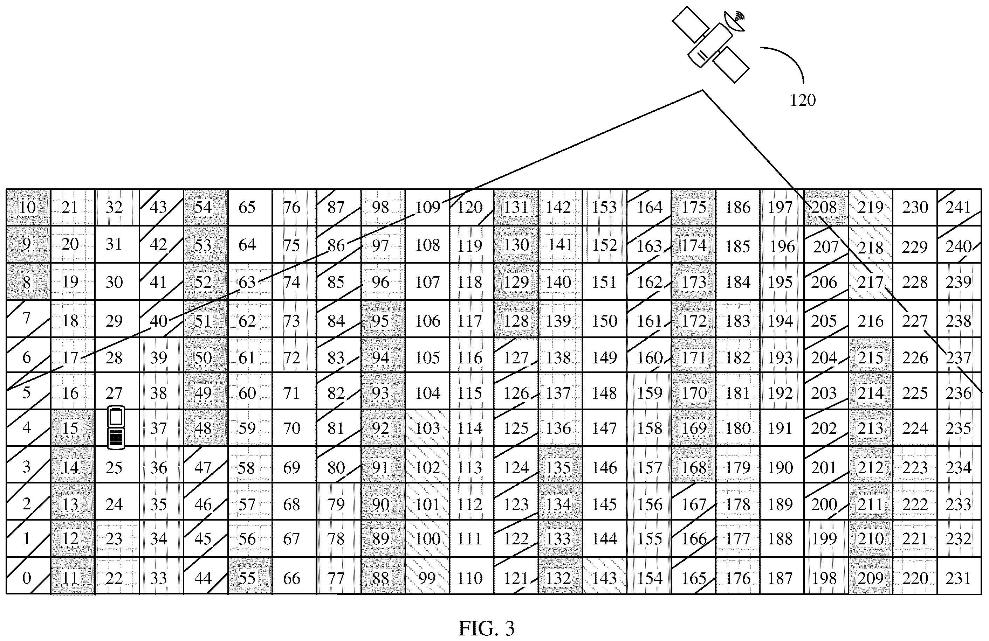

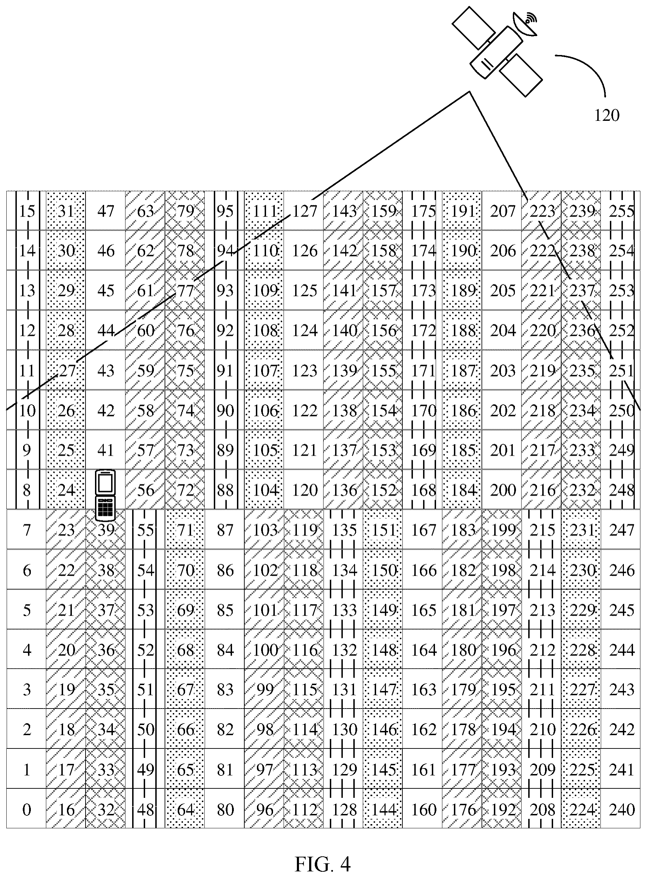

Step 1: The network device 120 delivers the beam coverage information by using broadcast information, where the beam coverage information may include a coverage region of a satellite beam, or may include a coverage region of a beam set. The beam coverage information is information about beam coverage of the network device. An SSB beam is used as an example. The beam coverage information includes a scanning sequence of SSB scanning beams, regions covered by different SSB scanning beams, and the like. FIG. 3 is a diagram of an example of beam coverage information according to some embodiments of the present disclosure. As shown in the figure, an overall satellite coverage diagram is a rectangle. Optionally, a coverage area of each beam is also a rectangle. FIG. 4 is a diagram of another example of beam coverage information according to some embodiments of the present disclosure. As shown in the figure, an overall satellite coverage diagram is a square. Optionally, a coverage area of each beam is also a square. It should be understood that the coverage diagram is merely used as an example, and a longer side and a shorter side of the coverage diagram are not limited. Beam coverage information for SSB scanning may be delivered by using one SSB beam (one SSB beam corresponds to one SSB index) as a granularity.

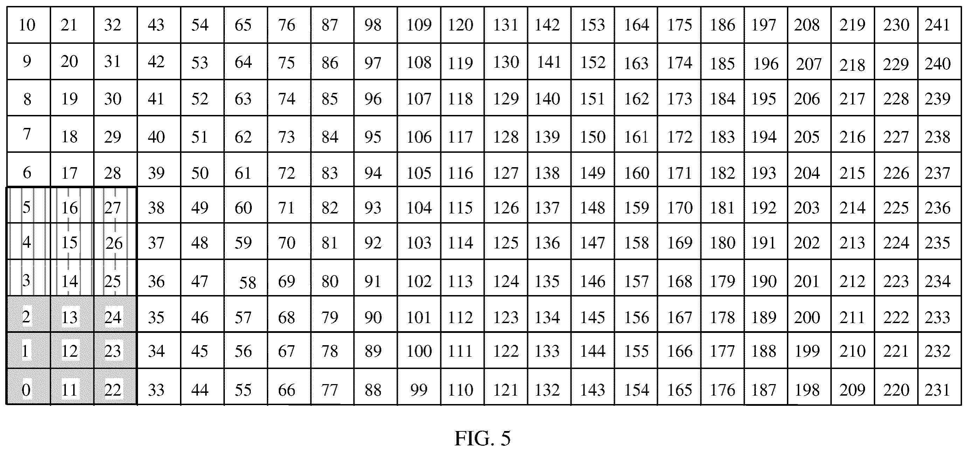

Optionally, the beam coverage information for SSB scanning may alternatively use a plurality of SSB beams as a granularity, that is, use a beam set (one piece of beam coverage information corresponds to a plurality of SSB beams/SSB indexes) as a granularity. For example, eight SSBs shown in FIG. 3 are one beam set group, and the network device 120 delivers a piece of large beam coverage information by using a beam set as a granularity. To be specific, an SSB 0 to an SSB 7 are one beam set, and are represented by one piece of beam coverage information; and an SSB 8 to an SSB 15 are one beam set, and are represented by one piece of beam coverage information. In addition, coverage information of one beam set may be further divided based on a position region. FIG. 5 is a diagram of still another example of beam coverage information according to some embodiments of the present disclosure. As shown in FIG. 5, SSB beams {0, 1, 2, 11, 12, 13, 22, 23, 24} are a beam set, and SSB beams {3, 4, 5, 14, 15, 16, 25, 26, 27} are a beam set. The SSB beams {0, 1, 2, 11, 12, 13, 22, 23, 24} have adjacent coverage or are located in adjacent position regions, and the SSB beams {3, 4, 5, 14, 15, 16, 25, 26, 27} have adjacent coverage or are located in adjacent position regions.

The foregoing description is merely an example. The beam coverage information may alternatively be other beam coverage information, and is not limited to an SSB beam.

Step 2: The terminal device 110 receives the beam coverage information delivered by the network device 120, to restore a beam coverage status of a current serving cell. For example, the terminal device may restore a coverage region diagram of each SSB of the current cell.

The network device 120 delivers coverage information, a covered geographical position region, and the like of each SSB beam on the ground. In this case, the terminal device may directly restore specific coverage of each SSB beam based on the coverage information.

Optionally, the network device 120 delivers weight information of each beam or a beam shape sent by the network device 120. The terminal device 110 needs to calculate, with reference to a satellite ephemeris and an optimal SSB (with an index of the optimal SSB) in which the terminal device 110 is currently located, a covered geographical position region on the ground corresponding to a corresponding beam. The terminal device 110 needs to maintain the optimal SSB in which the terminal device 110 is currently located. For example, the terminal device searches for an SSB in an initial access procedure, and detects and maintains an optimal SSB, to determine an index of the optimal SSB in which the terminal device is currently located. Alternatively, after access, the terminal device performs at least one round of SSB measurement, performs one round of measurement on an SSB in a range of an SSB scanning periodicity, and selects and maintains an optimal SSB based on a measurement result.

Further, the terminal device 110 calculates accurate beam information of a current serving position with reference to a position of the terminal device 110, the beam coverage information, the satellite ephemeris, the current optimal SSB, and the like, determines an index of a current optimal SSB, determines, based on an SSB scanning pattern, an SSB index corresponding to a to-be-measured receive beam, determines an accurate range that needs to be measured by the terminal device 110, and performs SSB measurement on a corresponding time-frequency resource. The SSB scanning pattern includes a scanning sequence of SSB beams, a start point of beam scanning, and the like. For example, scanning is performed from 0 to 231 in ascending order along a shorter side of a rectangle. The SSB scanning pattern determines a coverage sequence of the SSB beams on the ground.

When determining the accurate range of SSB measurement, the terminal device 110 may determine, with reference to an SMTC window configuration, an index of a to-be-measured SSB in an SMTC window range configured by the network device, and measure the SSB on a time-frequency resource corresponding to the index of the to-be-measured SSB in the SMTC window. In this case, SSB measurement by the terminal device is triggered by the network device. Optionally, the terminal device may not be limited to the SMTC window configuration, and the terminal device may determine an index of a to-be-measured SSB of the terminal device, and trigger measurement.

Step 3: The terminal device 110 reports the measurement result to the network device, to assist the network device in beam switching. The terminal device 110 enables, based on the measurement result, a subsequent procedure, like cell reselection or cell handover. Specifically, after the terminal device 110 reports the measurement result to the network device, if the current optimal SSB of the terminal device 110 is changed, the network device 120 may subsequently determine a subsequent scheduling beam for the terminal device 110 based on an updated optimal SSB. If the terminal device 110 detects, through measurement, that SSB signal quality of an adjacent satellite is better, the terminal device 110 subsequently performs a subsequent cell reselection or cell handover procedure based on a measured optimal SSB of the adjacent satellite. Further, the terminal device may start an initial access procedure of the adjacent satellite based on the optimal SSB of the adjacent satellite, initiate random access, and the like.

The beam coverage information may be carried in the broadcast information sent by the network device, for example, a system information block 1 (System Information Block 1, SIB1), a system information block 19 (System Information Block 19, SIB19), or RRC signaling.

The beam coverage information may be delivered as a list in a sequence of SSB indexes. For example:

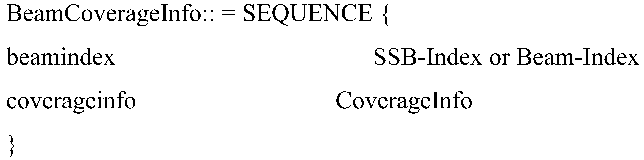

The coverage information may be used in SSB measurement in an idle state and a connected state, and is used to determine an accurate index of the to-be-measured SSB.

Optionally, the coverage information may be alternatively used in the initial access procedure, and is used to assist the terminal device in better selecting an access occasion (Random Access Channel Occasion, RO) resource for sending a physical random access channel (Physical Random Access Channel, PRACH). For example, this can resolve a problem that due to an inaccurate optimal SSB maintained by the UE, a PRACH sent on an RO resource corresponding to the SSB cannot be successfully received by the network device. Specifically, in an initial access procedure, the UE receives an SSB, selects an optimal SSB, and receives system information based on the SSB. The terminal device obtains beam coverage information of a cell and/or a neighboring cell from the received system information. The terminal device may restore, based on the beam coverage information, an SSB scanning pattern and a region covered by an SSB beam. With reference to the position of the UE and the ephemeris information, the UE may more accurately learn of an SSB beam range of the UE. This can assist in selecting an RO resource for sending uplink random access, and improve initial access performance.

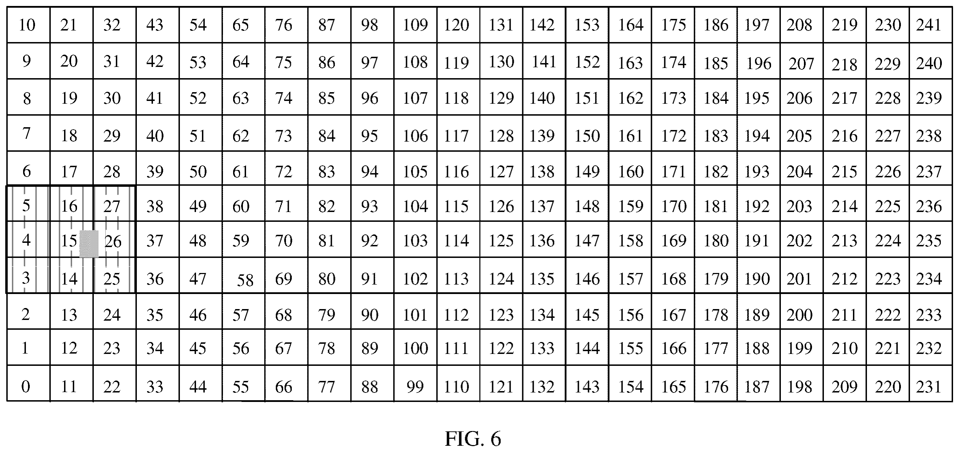

For example, as shown in FIG. 6, in an initial access procedure, the UE is located at edges of an SSB #15 and an SSB #26, and an optimal SSB that may be measured by the UE is the SSB #26. However, as a satellite moves, optimal SSB coverage should be SSB#15 when the UE needs to send random access. If the UE does not obtain the beam coverage information, the UE sends an uplink random access request on an RO resource corresponding to the SSB #26. Because a service is actually provided by the SSB #15, access fails. Optionally, with reference to the beam coverage information, the terminal device may learn, based on the satellite ephemeris and a current GNSS position of the terminal device, that a currently serving SSB beam is the SSB #15. In this case, the terminal device changes a selected RO resource for sending the PRACH, and sends the PRACH on an RO resource corresponding to the SSB #15, ensuring a random access procedure of the UE.

Optionally, after determining the SSB beam range of the UE based on the beam coverage information, the UE may further send a random access request on RO resources corresponding to a plurality of SSBs, further improving access performance. For example, the UE may determine, based on the SSB scanning pattern, that the SSB beam range of the UE includes {SSB#3, SSB#4, SSB#5, SSB#14, SSB#15, SSB#16, SSB#25, SSB#26, SSB#27}, and the UE may send the PRACH on the RO resources corresponding to the plurality of SSB beams, improving the access performance.

Optionally, a valid time T (a validity period T) of the SSB is defined, that is, it is specified that a time difference between an RO selected by the UE and the valid time of the SSB is less than or equal to T. The optimal SSB measured by the UE and the RO used by the UE to send the PRACH need to meet constraint of the validity period T. If the validity period T expires, the UE needs to continue to measure and maintain an optimal SSB, increasing an access success rate of the UE. With the constraint of the valid time, this prevents the UE from selecting an incorrect RO for sending the PRACH due to a change in the optimal SSB, and therefore avoids an access failure caused by the PRACH sent on the RO not being successfully received by the network device.

Optionally, the solution in this embodiment may also be applied to adjacent satellite measurement.

Optionally, the network device may deliver beam coverage information of the adjacent satellite. A specific delivery manner and signaling bearer may be the same as those of the beam coverage information delivered by a serving satellite.

Further, simplification of the beam coverage information of the adjacent satellite may be considered. For example, one-bit BeamCoverageSame is added to indicate whether beam coverage information of the serving satellite and beam coverage information of the adjacent satellite are the same. If the beam coverage information of the serving satellite and the beam coverage information of the adjacent satellite are the same, a value is 1. If the beam coverage information of the serving satellite and the beam coverage information of the adjacent satellite are different, a value is 0.

In this embodiment, the network device delivers the beam coverage information, and the terminal device restores the beam coverage information, so that the terminal device can determine the beam coverage in which the terminal device is located, implementing accurate SSB measurement.

To understand the present disclosure more thoroughly and completely, the following describes Embodiment 2 with reference to FIG. 2. It should be noted that each part of content in Embodiment 2 may be used independently or randomly combined with content in another embodiment, and is merely used as an example but not intended to limit the protection scope of the present disclosure.

### Embodiment 2

This embodiment further defines, based on Embodiment 1, a specific form in which a network device delivers beam coverage information. In this embodiment, the network device delivers a parameter like a beam coverage radius R or a beam coverage diameter D, or a beam center point C(x, y) to represent the beam coverage information, so that a terminal device is enabled to obtain the beam coverage information based on the delivered parameter.

Steps and procedures in this embodiment and Embodiment 3 are the same as those in Embodiment 1. An application scenario and an additional extension in Embodiment 1 are both applicable to Embodiment 2 and Embodiment 3. In Embodiment 2 and Embodiment 3, only a specific parameter carried in beam coverage information is extended.

Step 1: The network device 120 delivers a beam radius R, or a beam diameter D, and a beam center point C by using broadcast information.

Step 2: The terminal device 110 determines the beam coverage information (a beam coverage area) based on R or D and C, calculates accurate beam information of a current serving position based on a position of the terminal device 110 and a satellite ephemeris, determines a serving SSB beam and/or a to-be-measured SSB beam, and performs SSB measurement on a corresponding time-frequency resource. Optionally, accurate SSB measurement may be performed on a corresponding time-frequency resource in a measurement window configured in an SMTC window.

Step 3: The terminal device 110 reports a measurement result to the network device, to assist the network device in beam switching. The terminal device 110 enables, based on the measurement result, a subsequent procedure, like cell reselection or cell handover. Specifically, after the terminal device 110 reports the measurement result to the network device 120, if a current optimal SSB of the terminal device 110 is changed, the network device 120 may subsequently determine a subsequent scheduling beam for the terminal device 110 based on an updated optimal SSB. If the terminal device 110 detects, through measurement, that SSB signal quality of an adjacent satellite is better, the terminal device 110 subsequently performs a subsequent cell reselection or cell handover procedure based on a measured optimal SSB of the adjacent satellite. Further, the terminal device may start an initial access procedure of the adjacent satellite based on the optimal SSB of the adjacent satellite, initiate random access, and the like.

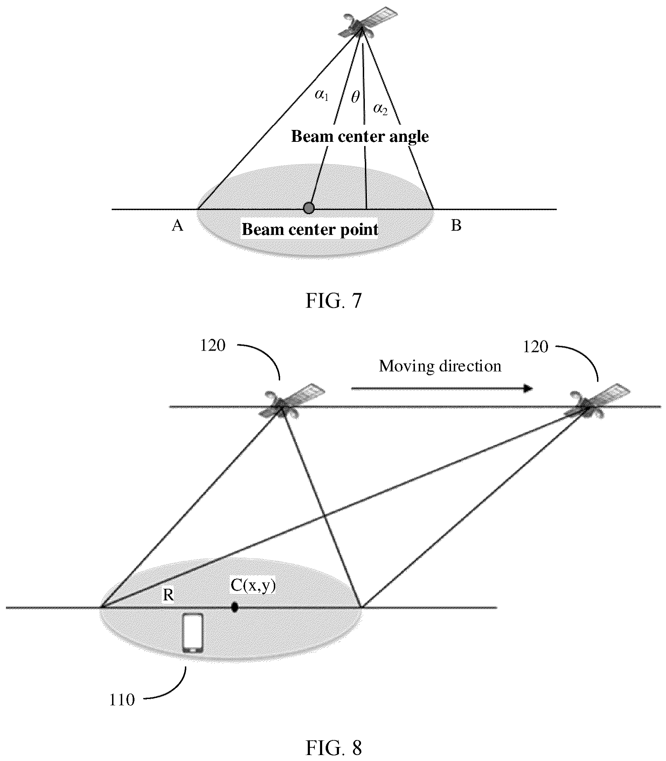

The beam center point is a position at which the beam is projected onto the ground in a central direction of the beam. FIG. 7 is a diagram of beam projection according to some embodiments of the present disclosure. As shown in FIG. 7, a beam center angle *θ* means that an included angle between the beam center point and the vertical ground is *θ*. A beamwidth is determined based on a point at which a gain decreases by x dB (for example, points A and B), starting from the beam center point (a point of a signal with highest reference signal received power). A beamwidth angle is [*θ+α*₁, *θ-α*₂]. x dB may be defined based on an actual situation, and may be commonly 3 dB, that is, the beamwidth or beam coverage is determined based on a point at which a gain decreases by 3 dB, starting from the beam center point.

Optionally, the beam radius R, or the beam diameter D, and the beam center point C that are delivered by the network device may directly indicate beam coverage information of the beam projected onto the ground by using the ground as a reference. Optionally, the beam coverage radius R or the beam diameter D, and the beam center point C that are delivered by the network device may be beam coverage information present when the beam sent by the network device is projected to a height h of a reference point. The terminal device needs to calculate, based on the height h of the reference point, the coverage information, a satellite position, the position of the terminal device, and the like, a beam coverage area of the beam projected onto the ground.

Optionally, a manner of delivering the beam radius R, or the beam diameter D, and the beam center point C in this embodiment may be applied to an earth-fixed (Earth-Fixed) scenario. FIG. 8 is a diagram of an earth-fixed scenario in which some embodiments of the present disclosure may be implemented. As shown in FIG. 8, the earth-fixed scenario means that the ground is fixed. To be specific, as a satellite moves, numbers of beams covering a same region on the ground remain unchanged, and corresponding beam weights change.

Compared with a conventional technology, this embodiment mainly further defines, based on Embodiment 1, a specific form in which the network device delivers the beam coverage information. In this embodiment, the network device delivers a parameter like the beam coverage radius R or the beam coverage diameter D, or the beam center point C(x, y) to represent the beam coverage information, so that the terminal device is enabled to obtain the beam coverage information based on the delivered parameter.

To understand the present disclosure more thoroughly and completely, the following describes Embodiment 3 with reference to FIG. 2. It should be noted that each part of content in Embodiment 3 may be used independently or randomly combined with content in another embodiment, and is merely used as an example but not intended to limit the protection scope of the present disclosure.

### Embodiment 3

Both this embodiment and Embodiment 2 are further detailed based on the beam coverage information in Embodiment 1. In this embodiment, a network device delivers beam coverage angle information used to represent the beam coverage information, so that a terminal device is enabled to obtain the beam coverage information based on a delivered parameter.

Steps and procedures in this embodiment and Embodiment 2 are the same as those in Embodiment 1. An application scenario and an additional extension in Embodiment 1 are both applicable to Embodiment 2 and Embodiment 3. In Embodiment 2 and Embodiment 3, only a specific parameter carried in beam coverage information is extended.

Step 1: The network device 120 delivers the beam coverage angle information by using broadcast information.

Step 2: The terminal device 110 determines the beam coverage information (a beam coverage area) based on the angle information and a satellite ephemeris, calculates accurate beam information of a current serving position based on a position of the terminal device 110, determines a serving SSB beam and/or a to-be-measured beam, and performs SSB measurement at a corresponding time-frequency resource position. Optionally, after the to-be-measured SSB beam is determined, accurate SSB measurement may be performed on a corresponding time-frequency resource in a measurement window configured in an SMTC window.

Step 3: The terminal device 110 reports a measurement result to the network device 120, to assist the network device 120 in beam switching. The terminal device 110 enables, based on the measurement result, a subsequent procedure, like cell reselection or cell handover. Specifically, after the terminal device 110 reports the measurement result to the network device 120, if a current optimal SSB of the terminal device 110 is changed, the network device may subsequently determine a subsequent scheduling beam for the terminal device 110 based on an updated optimal SSB. If the terminal device 110 detects, through measurement, that SSB signal quality of an adjacent satellite is better, the terminal device 110 subsequently performs a subsequent cell reselection or cell handover procedure based on a measured optimal SSB of the adjacent satellite. Further, the terminal device may start an initial access procedure of the adjacent satellite based on the optimal SSB of the adjacent satellite, initiate random access, and the like.

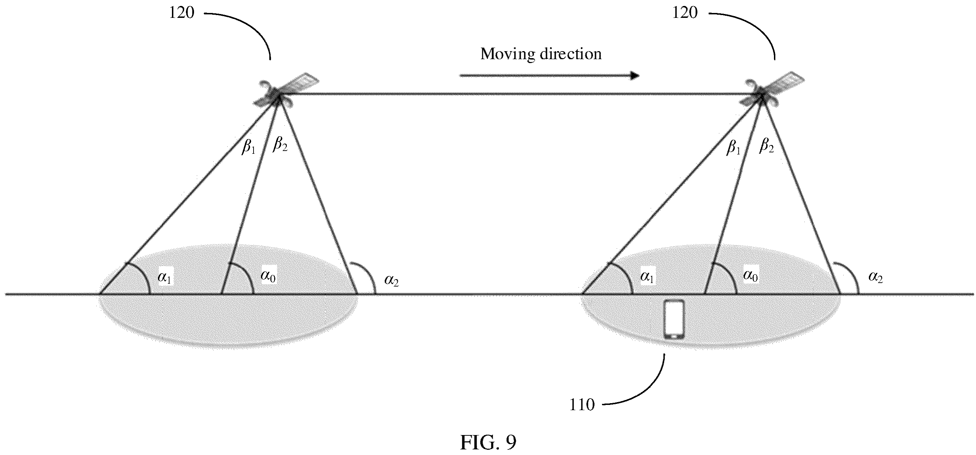

Optionally, a manner of delivering the beam coverage angle information in this embodiment may be applied to an earth-moving (Earth-Moving) scenario. The earth-moving scenario means that a satellite moves. To be specific, as the satellite moves, numbers of beams covering a same region on the ground change, and corresponding beam weights of the network device remain unchanged. FIG. 9 is a diagram of an earth-moving scenario in which some embodiments of the present disclosure may be implemented.

Optionally, the beam coverage angle delivered by the network device may directly indicate a beam coverage angle of a beam projected onto the ground by using the ground as a reference, for example, α₀, α₁, and α₂ as shown in FIG. 9.

Optionally, the beam coverage angle delivered by the network device may be beam coverage angles of beams sent by the network device that are projected to the height h of the reference point: α₀, α₁, and α₂. The terminal device needs to calculate, based on the height h of the reference point, the coverage information, a satellite position, the position of the terminal device, and the like, a beam coverage area of the beam projected onto the ground.

Optionally, the beam coverage angle delivered by the network device may be angles of beams sent by the network device: β₁ and β₂. The terminal device needs to calculate, based on the beam coverage angle information, the satellite position, the position of the terminal device, and the like, a beam coverage area of the beam projected onto the ground.

In this embodiment, the beam coverage angle information is used to represent the beam coverage information, and the terminal device may obtain the beam coverage information based on the delivered information, to determine a to-be-measured beam with reference to the satellite ephemeris and the position of the terminal device, to perform accurate SSB measurement.

To understand the present disclosure more thoroughly and completely, the following describes Embodiment 4 with reference to FIG. 2. It should be noted that each part of content in Embodiment 4 may be used independently or randomly combined with content in another embodiment, and is merely used as an example but not intended to limit the protection scope of the present disclosure.

### Embodiment 4

In this embodiment, how to reduce signaling overheads of broadcast information with reference to a beam scanning pattern is further considered based on Embodiment 1, Embodiment 2, and Embodiment 3.

In this embodiment, there is a limited quantity of beam scanning patterns, and/or a beam scanning pattern is predefined. The beam scanning pattern may be in different shapes, such as a circle, a rectangle, a square, an ellipse, or an irregular shape. When the broadcast signaling overheads are reduced with reference to the beam scanning pattern, a specific beam coverage shape needs to be predefined or indicated.

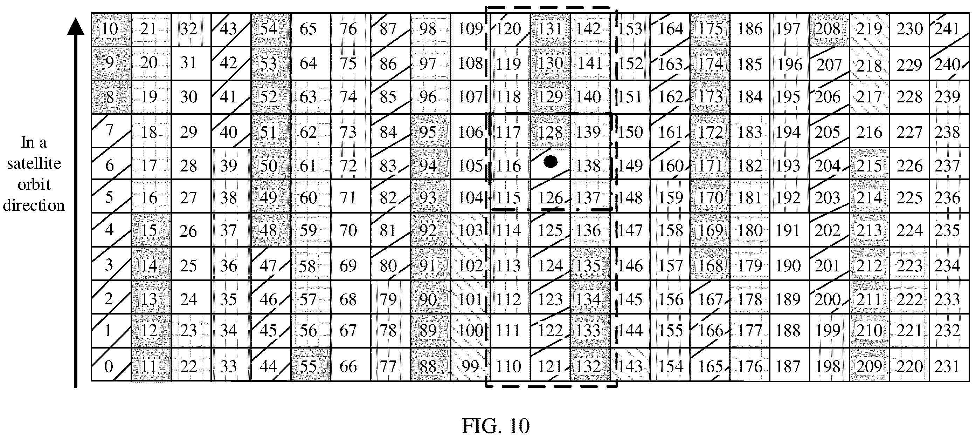

Optionally, a rectangular beam coverage shape is used as an example. As shown in FIG. 10, an overall satellite coverage diagram is a rectangle. Optionally, a coverage area of each beam is also a rectangle.

With reference to a scanning pattern shown in the figure, optionally, a network device 120 may deliver a quantity X (X=22) of longer-side beams, a radius R1 of a longer-side beam, a quantity Y (Y=11) of shorter-side beams, and a radius R2 of a shorter-side beam.

Optionally, the network device 120 may deliver a beam scanning manner. For example, the network device 120 predefines that a scanning manner list is {starting along a longer side, starting along a shorter side} and/or {sequential numbering, serpentine numbering}, and indicates one of the manners by using a bit. For example, "starting along a longer side" indicates that beams/SSB indexes are counted/numbered along the longer side. "Starting along a shorter side" indicates that beams/SSB indexes are numbered along the shorter side. As shown in FIG. 10, the beams/SSB indexes are numbered from 0 to 10 along the shorter side. "Sequential numbering" indicates that minimum beam numbers of all columns (with reference to starting along a shorter side)/rows (with reference to starting along a longer side) are in a same direction. For example, minimum values 0, 11, 22, 33, 44, 66, 77, 88, 99, 110, 121, 132, 143, 154, 165, 176, 187, 198, 209, 220 and 231 of all the columns are at a lower edge of beam coverage, and beam numbers are arranged in ascending order from the lower edge to an upper edge of a coverage area. "Serpentine numbering" indicates that beam numbers of all columns (with reference to starting along a shorter side)/rows (with reference to starting along a longer side) are consecutive. For example, in a first column, beam numbers are from 0 to 10 from bottom to top; and in a second column, beam numbers are from 21 to 11 from bottom to top (that is, 11, 12, 13, 14, 15, 16, 17, 18, 19, 20 and 21 from top to bottom).

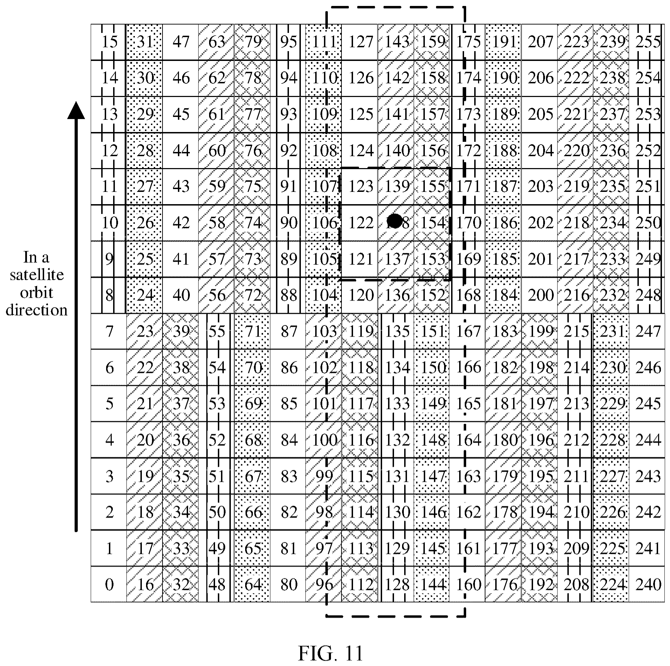

Optionally, a square beam coverage shape is used as an example. As shown in FIG. 11, an overall satellite coverage diagram is a square. Optionally, a coverage area of each beam is also a square. A longer side or a shorter side may be any side. A beam scanning pattern is a quantity of beams on a side of a square for square scanning.

Optionally, the network device 120 may deliver a quantity M of beams on a side and a beam radius R3. As shown in the figure, M=16, and an actual value of M is not limited.

Optionally, the network device 120 may deliver a beam scanning manner. For example, the network device 120 predefines that a scanning manner list is {starting along a longer side, starting along a shorter side} and/or {sequential numbering, serpentine numbering}, and indicates one of the manners by using a bit. For example, "starting along a longer side" indicates that beams/SSB indexes are counted/numbered along the longer side. "Starting along a shorter side" indicates that beams/SSB indexes are numbered along the shorter side. The longer side or the shorter side may be any side. As shown in FIG. 11, beams/SSB indexes are numbered from 0 to 15 along one side. "Sequential numbering" indicates that minimum beam numbers of all columns/rows are in a same direction. For example, minimum values 0, 16, 32, 48, 64, 80, 96, 112, 128, 144, 160, 176, 192, 208, 224 and 240 of all the columns are at a lower edge of beam coverage, and beam numbers are arranged in ascending order from the lower edge to an upper edge of a coverage area. "Serpentine numbering" indicates that beam numbers of all columns/rows are consecutive. For example, in a first column, beam numbers are from 0 to 15 from bottom to top; and in a second column, beam numbers are from 31 to 16 from bottom to top (that is, 16, 17, 18, 19, 20, 21, 22, 23, 24, 25, 26, 27, 28, 29, 30 and 31 from top to bottom).

Optionally, the network device 120 delivers a start position of a beam numbered 0. For example, a position of an SSB #0 may be represented by an offset relative to a nadir. The start position of the beam numbered 0 may be a specific position or a relative position, for example, a lower left corner, an upper left corner, an upper right corner, or a lower right corner of a rectangular pattern.

Step 1: The network device 120 delivers a related parameter based on a beam scanning pattern. Optionally, rectangular coverage is used as an example. The related parameter includes at least one or more of the following: a quantity X of longer-side beams, a quantity Y of shorter-side beams, the position of the SSB #0, and a scanning manner (numbering along the longer side or the shorter side and/or sequential numbering or serpentine numbering). In addition, there are the following manners depending on whether the beam radius is included:
- Manner 1: If the delivered parameter includes the beam radius, a terminal device 110 can completely restore a coverage status, and deduce a to-be-measured SSB more accurately based on a current SSB beam range.
- Manner 2: If the delivered parameter does not include the beam radius, the terminal device 110 may deduce a surrounding SSB index based on an SSB selected in an access process as an anchor, to perform SSB measurement.

Step 2: The terminal device 110 determines, based on the delivered information, a quantity of surrounding beams that need to be measured, for example, one circle, or two circles.

Step 3: The terminal device 110 reports a measurement result to the network device 120, to assist the network device 120 in beam switching. The terminal device 110 enables, based on the measurement result, a subsequent procedure, like cell reselection or cell handover. Specifically, after the terminal device 110 reports the measurement result to the network device, if the current optimal SSB of the terminal device 110 is changed, the network device 120 may subsequently determine a subsequent scheduling beam for the terminal device 110 based on an updated optimal SSB. If the terminal device 110 detects, through measurement, that SSB signal quality of an adjacent satellite is better, the terminal device 110 subsequently performs a subsequent cell reselection or cell handover procedure based on a measured optimal SSB of the adjacent satellite. Further, the terminal device may start an initial access procedure of the adjacent satellite based on the optimal SSB of the adjacent satellite, initiate random access, and the like.

Optionally, different representation parameters need to be delivered for different scanning patterns. For rectangular scanning, the quantity X of longer-side beams, the quantity Y of shorter-side beams, a radius R1 of a longer-side beam, a radius R2 of a shorter-side beam, and the like may be used. For circular scanning, a quantity Z of beams per circle may be used. For square scanning, a quantity M of beams on a side of a square may be used.

In this embodiment, signaling overheads of broadcast information are reduced with reference to the beam scanning pattern, so that low-overhead beam coverage information is enabled to be delivered, and implementation overheads are reduced.

To understand the present disclosure more thoroughly and completely, the following describes Embodiment 5 with reference to FIG. 2. It should be noted that each part of content in Embodiment 5 may be used independently or randomly combined with content in another embodiment, and is merely used as an example but not intended to limit the protection scope of the present disclosure.

### Embodiment 5

In both this embodiment and Embodiment 4, how to reduce broadcast signaling overheads is considered based on Embodiment 1, Embodiment 2, and Embodiment 3.

In this embodiment, correlation between beams is further considered based on Embodiment 4, to reduce the broadcast signaling overheads. Specifically, the solutions may be as follows.

Solution 1: A network device 120 determines a gradual or hopping manner of an SSB beam based on a scanning pattern, to indicate beam coverage information. Two different manners are defined. The gradual manner means that beam weights between adjacent beams are similar, and only relative information needs to be delivered, but not all information needs to be delivered. For example, beams with SSB indexes 0 to 7 are gradual, and only relative information needs to be delivered. For example, only a base center point position a and an offset value coefficient b are delivered on the beams with the SSB indexes 0 to 7, and finally a beam center point is restored to a beam=f(x)=a+bx. a may be a base beam, and the offset value b may be a variation characteristic.

The hopping manner means adjacent beams are discontinuous, beam numbers change abruptly rather than remaining in sequence, and delivery of absolute information needs to be considered. When coverage regions corresponding to beams with adjacent beam numbers are not adjacent, absolute information needs to be delivered. For example, if beam coverage between SSB indexes 10 and 11 hops, absolute information of beam coverage information needs to be delivered.

Solution 2: Compress, by using a beam similarity, a quantity of bits that need to be occupied by beam coverage information.

Specifically, in Manner 1, the beam similarity is considered, and beam information of a plurality of beams is represented by using a beam 1 and a characteristic parameter.

Optionally, in Manner 2, the network device compresses and extracts characteristic quantities by using artificial intelligence (Artificial Intelligence, AI), and a terminal device restores beam information before compression.

In this embodiment, a quantity of bits required for the beam coverage information is further simplified by using correlation between adjacent beams with reference to a scanning pattern and the correlation between the adjacent beams, to reduce signaling overheads, so that low-overhead beam coverage information is enabled to be delivered, and implementation overheads are reduced. In comparison with a conventional technology, in this embodiment, first, the network device delivers the beam coverage information; second, when delivering the beam coverage information, the network device defines in detail, with reference to the scanning pattern and the correlation between the adjacent beams, a delivered parameter for the beam coverage information simplified by using the correlation between the adjacent beams. For example, the base beam and a variation represent adjacent beams, and the absolute information represents a hopping beam. In addition, a neural network/machine learning algorithm like AI may be further used to extract a characteristic quantity of the beam coverage information, and represent and restore the characteristic quantity.

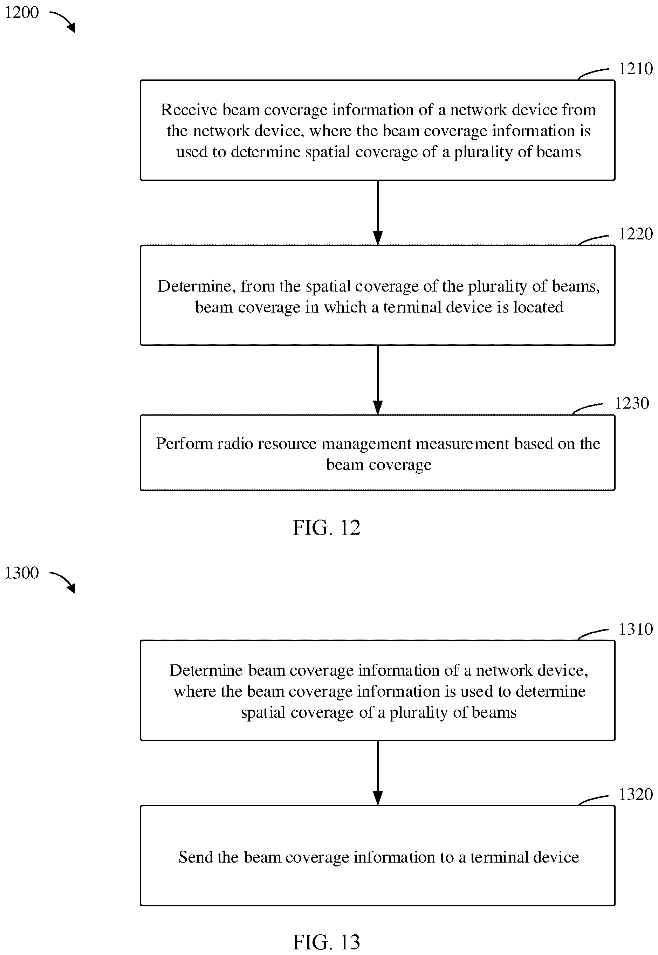

FIG. 12 is a flowchart of a method 1200 implemented by a terminal device according to an embodiment of the present disclosure. For clarity of discussion without any limitation, a process 1300 is discussed with reference to FIG. 1A. In a possible implementation, the method 1200 may be implemented by the terminal device 110 in the communication system 100. In another possible implementation, the method 1200 may alternatively be implemented by another communication device independent of the communication system 100. For example, the following describes the method 1200 by using an example in which the method 1200 is implemented by the terminal device 110 in the communication system 100.

In block 1210, the terminal device 110 receives beam coverage information of a network device from the network device, where the beam coverage information is used to determine spatial coverage of a plurality of beams. In block 1220, the terminal device 110 determines, from the spatial coverage of the plurality of beams, beam coverage in which the terminal device 110 is located. In block 1230, the terminal device 110 performs radio resource management measurement based on the beam coverage.

In some embodiments, the beam coverage information may include one or more of the following: a scanning sequence of the spatial coverage of the plurality of beams, a geographic region covered by the spatial coverage of the plurality of beams, a spatial filtering parameter of the spatial coverage of the plurality of beams, or shape information of the spatial coverage of the plurality of beams.

In some embodiments, the beam coverage information may include: a beam coverage radius or a beam coverage diameter of the plurality of beams, a beam center point and/or a beam center angle of the plurality of beams, or beam coverage angle information of the plurality of beams. In some embodiments, the beam coverage radius or the beam coverage diameter, and the beam center point, and/or the beam center angle may be determined with reference to the ground or a reference plane at a predetermined height.

In some embodiments, the coverage angle information may include one or more of the following: a beam coverage angle of the beam projected onto the ground, a beam coverage angle of the beam projected onto a reference plane at a predetermined height, or a beam angle of the beam present when the beam is sent from the network device.

In some embodiments, the terminal device may further determine the beam coverage based on one or more of the following: a position of the terminal device, a satellite ephemeris associated with the network device, or a beam that is previously determined by the terminal device and that previously covers the terminal device.

In some embodiments, performing the radio resource management measurement may include: The terminal device determines, based on the beam coverage, a covering beam that covers the terminal device; the terminal device determines at least one to-be-measured beam based on a beam scanning pattern of the network device and the covering beam; and performs the radio resource management measurement based on the at least one to-be-measured beam.

In some embodiments, determining the at least one to-be-measured beam may include: The terminal device receives a beam measurement time window configuration from the network device, where the measurement time window configuration indicates a measurement periodicity and duration, determined by the network device, for the radio resource management measurement performed by the terminal device; and the terminal device determines the at least one to-be-measured beam based on the beam scanning pattern of the network device, the covering beam, and the beam measurement time window configuration.

In some embodiments, the network device may be a first network device 120, the beam coverage information may be first beam coverage information, and the method further includes: The terminal device receives second beam coverage information of a second network device 130 from the first network device. In some embodiments, the second beam coverage information may include indication information, where the indication information indicates whether the second beam coverage information is the same as the first beam coverage information.

In some embodiments, the beam coverage information may include a parameter related to a beam scanning pattern of the plurality of beams. In some embodiments, the parameter may include one or more of the following: shape information of the plurality of beams, a quantity of longer-side beams in a rectangular coverage region of the plurality of beams, a quantity of shorter-side beams in the rectangular coverage region, a quantity of beams per circle present when the beam scanning pattern is circular scanning, position information of a start beam, a scanning manner of the plurality of beams, or a beam coverage radius or a beam coverage diameter of the plurality of beams.

In some embodiments, based on determining that the parameter includes the beam coverage radius or the beam coverage diameter, the terminal device determines a to-be-measured beam based on the beam coverage radius or the beam coverage diameter. Based on determining that the parameter does not include the beam coverage radius or the beam coverage diameter, the terminal device determines the to-be-measured beam based on a beam selected in an access procedure.

In some embodiments, the beam coverage information may include: indication information indicating whether a change between beams in the plurality of beams is in a gradual manner, where the gradual manner indicates a change between beams with adjacent beam numbers or between geographically adjacent beams. In this gradual manner, a second beam in the plurality of beams is represented by offset information relative to a center point of a first beam. In some embodiments, the beam coverage information may be compressed based on mathematical cross-correlation between beams in the plurality of beams.

In some embodiments, the terminal device may send a measurement result of the radio resource management measurement to the network device. In some embodiments, the terminal device may perform, based on the beam coverage, random access to the network device.

In some embodiments, performing the random access may include: The terminal device determines, based on the beam coverage, a covering beam that covers the terminal device; and the terminal device sends a random access request to the network device on a random access occasion corresponding to the covering beam. In some embodiments, performing the random access may include: The terminal device determines a plurality of beams corresponding to the beam coverage; and the terminal device sends a random access request to the network device on a plurality of random access occasions corresponding to the plurality of beams. In some embodiments, if the covering beam fails when the random access request is initiated, the terminal device may obtain a new covering beam.

In this way, a beam measurement method is designed for an NTN network that is applied to local cell and neighboring cell measurement, to implement position-based accurate measurement. In addition, signaling is further simplified and compressed to reduce signaling overheads of a beam measurement configuration.

FIG. 13 is a schematic flowchart of a method 1300 implemented by a network device 120 according to an embodiment of the present disclosure. For clarity of discussion without any limitation, the process 1300 is discussed with reference to FIG. 1A. In a possible implementation, the method 1300 may be implemented by the network device 120 in the communication system 100. In another possible implementation, the method 1300 may alternatively be implemented by another communication device independent of the communication system 100. For example, the following describes the method 1300 by using an example in which the method 1300 is implemented by the network device 120 in the communication system 100.

In block 1310, the network device 120 determines beam coverage information of the network device 120, where the beam coverage information is used to determine spatial coverage of a plurality of beams. In block 1320, the network device 120 sends the beam coverage information to a terminal device 110.

In some embodiments, the beam coverage information includes one or more of the following: a scanning sequence of the spatial coverage of the plurality of beams, a geographic region covered by the spatial coverage of the plurality of beams, a spatial filtering parameter of the spatial coverage of the plurality of beams, or shape information of the spatial coverage of the plurality of beams.

In some embodiments, the beam coverage information may include one or more of the following: a beam coverage radius or a beam coverage diameter of the plurality of beams, a beam center point and/or a beam center angle of the plurality of beams, or beam coverage angle information of the plurality of beams. In some embodiments, the beam coverage radius or the beam coverage diameter, and the beam center point, and/or the beam center angle are determined with reference to the ground or a reference plane at a predetermined height.

In some embodiments, the coverage angle information includes one or more of the following: a beam coverage angle of the beam projected onto the ground, a beam coverage angle of the beam projected onto a reference plane at a predetermined height, or a beam angle of the beam present when the beam is sent from the network device. In some embodiments, in the beam coverage information, one of the plurality of beams or at least two of the plurality of beams may be used as a granularity for arrangement.

In some embodiments, the network device may determine a beam measurement time window configuration, where the measurement time window configuration indicates a measurement periodicity and duration for radio resource management measurement performed by the terminal device. In addition, the network device may send the beam measurement time window configuration to the terminal device.

In some embodiments, the network device may be a first network device 120, and the beam coverage information is first beam coverage information. The first network device may send second beam coverage information of a second network device 130 to the terminal device. In some embodiments, the second beam coverage information may include indication information, where the indication information indicates whether the second beam coverage information is the same as the first beam coverage information.

In some embodiments, the beam coverage information may include a parameter related to a beam scanning pattern of the plurality of beams. In some embodiments, the parameter includes one or more of the following: shape information of the plurality of beams, a quantity of longer-side beams in a rectangular coverage region of the plurality of beams, a quantity of shorter-side beams in the rectangular coverage region, a quantity of beams per circle present when the beam scanning pattern is circular scanning, position information of a start beam, a scanning manner of the plurality of beams, or a beam coverage radius or a beam coverage diameter of the plurality of beams.

In some embodiments, the beam coverage information may include: indication information indicating whether a change between beams in the plurality of beams is in a gradual manner, where the gradual manner indicates a change between beams with adjacent beam numbers or between geographically adjacent beams. In this gradual manner, a second beam in the plurality of beams is represented by offset information relative to a center point of a first beam. In some embodiments, the beam coverage information may be compressed based on mathematical correlation between beams in the plurality of beams.

In some embodiments, the network device may receive a measurement result of the radio resource management measurement from the terminal device; and the network device may send, to the terminal device based on the measurement result, an indication of performing beam switching.

In some embodiments, the network device may receive a random access request from the terminal device, where the random access request is transmitted on a random access occasion that corresponds to one or more beams corresponding to the beam coverage.

In this way, a beam measurement method is designed for an NTN network that is applied to local cell and neighboring cell measurement, to implement position-based accurate measurement. In addition, signaling is further simplified and compressed to reduce signaling overheads of a beam measurement configuration.

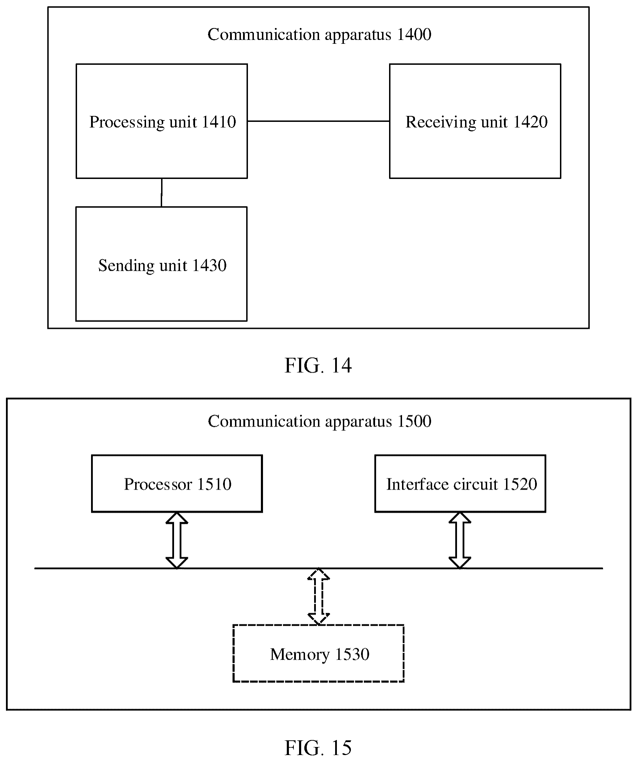

FIG. 14 is a diagram of a structure of a possible communication apparatus according to an embodiment of this application. The communication apparatus may implement functions of the terminal apparatus or the network apparatus in the foregoing method embodiments. Therefore, beneficial effects of the foregoing method embodiments can also be implemented. In this embodiment of this application, the communication apparatus may be the terminal device 110, the network device 120, or the network device 130 shown in FIG. 1, or a module (for example, a chip) used in the terminal device 110, the network device 120, or the network device 130.

As shown in FIG. 14, the communication apparatus 1400 includes a processing unit 1410, a receiving unit 1420, and a sending unit 1430. The communication apparatus may be configured to implement the functions of the terminal apparatus or the network apparatus in the method embodiments shown in FIG. 2, FIG. 12, or FIG. 13. In some embodiments, the processing unit may be a processor, the sending unit may be a transmitter, and the receiving unit may be a receiver.

As shown in FIG. 15, a communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to store instructions executed by the processor 1510, store input data that the processor 1510 needs to run instructions, or store data generated after the processor 1510 runs instructions.

When the communication apparatus 1500 is configured to implement the methods in the foregoing method embodiments, the processor 1510 is configured to perform a function of the processing unit 1410, and the interface circuit 1520 is configured to perform functions of the receiving unit 1420 and the sending unit 1430.

When the communication apparatus is a chip used in the terminal device 110, the network device 120, and the network device 130, the chip in the device implements functions of the terminal device 110, the network device 120, and the network device 130 in the foregoing method embodiments. The chip in the device receives information from another module (for example, a radio frequency module or an antenna) in the terminal device 110, the network device 120, and the network device 130. The information may be sent by another terminal device 110, network device 120, and network device 130. Alternatively, the chip in the terminal device sends information to another module (for example, a radio frequency module or an antenna) in the terminal device 110, the network device 120, and the network device 130, where the information is sent to another terminal device 110, network device 120, and network device 130.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this application provides a communication system. The communication system may include the communication apparatus in the embodiment shown in FIG. 14, for example, the terminal device 110, the network device 120, and the network device 130. Optionally, the terminal device 110, the network device 120, and the network device 130 in the communication system may perform the communication method shown in any one of FIG. 2, FIG. 12, and FIG. 13.

An embodiment of this application further provides a circuit. The circuit may be coupled to a memory, and may be configured to perform a procedure related to the terminal device 110, the network device 120, and the network device 130 in any one of the foregoing method embodiments. A chip system may include a chip, and may further include another component, like a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like.

It may be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the communication methods and apparatuses may be implemented in other manners. For example, the described apparatus embodiment is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can carry or store expected program code in a form of an instruction or a data structure and can be accessed by a computer.

As used in this specification, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". Terms such as "first", "second", and the like may indicate different objects or a same object, and are merely used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this application, and are not intended to limit the protection scope of embodiments of this application. Any variation or replacement that a person skilled in the art can easily figure out within the technical scope disclosed in embodiments of this application shall fall within the protection scope of embodiments of this application. Therefore, the protection scope of embodiments of this application should be subject to the protection scope of the claims.

## Claims

1. A communication method, comprising:
receiving, by a terminal device, beam coverage information of a network device from the network device, wherein the beam coverage information is used to determine spatial coverage of a plurality of beams;
determining, by the terminal device from the spatial coverage of the plurality of beams, beam coverage in which the terminal device is located; and
performing, by the terminal device, radio resource management measurement based on the beam coverage.

2. The method according to claim 1, wherein the beam coverage information comprises at least one of the following:
a scanning sequence of the spatial coverage of the plurality of beams,
a geographic region covered by the spatial coverage of the plurality of beams,
a spatial filtering parameter of the spatial coverage of the plurality of beams, or
shape information of the spatial coverage of the plurality of beams.

3. The method according to claim 1, wherein the beam coverage information comprises at least one of the following:
a beam coverage radius or a beam coverage diameter of the plurality of beams,
a beam center point and/or a beam center angle of the plurality of beams, or
beam coverage angle information of the plurality of beams.

4. The method according to claim 3, wherein the coverage angle information comprises at least one of the following:
a beam coverage angle of the beam projected onto the ground,
a beam coverage angle of the beam projected onto a reference plane at a predetermined height,
or
a beam angle or a beamwidth angle of the beam present when the beam is sent from the network device.

5. The method according to claim 1, wherein the terminal device further determines the beam coverage based on at least one of the following:
a position of the terminal device,
a satellite ephemeris associated with the network device, or
a beam that is previously determined by the terminal device and that previously covers the terminal device.

6. The method according to claim 1, wherein performing the radio resource management measurement comprises:
determining, by the terminal device based on the beam coverage, a covering beam that covers the terminal device;
determining, by the terminal device, at least one to-be-measured beam based on a beam scanning pattern of the network device and the covering beam; and
performing the radio resource management measurement based on the at least one to-be-measured beam.

7. The method according to claim 6, wherein determining the at least one to-be-measured beam comprises:
receiving, by the terminal device, a beam measurement time window configuration from the network device, wherein the measurement time window configuration indicates a measurement periodicity and duration, determined by the network device, for the radio resource management measurement performed by the terminal device; and
determining, by the terminal device, the at least one to-be-measured beam based on the beam scanning pattern of the network device, the covering beam, and the beam measurement time window configuration.

8. The method according to claim 1, wherein the network device is a first network device, the beam coverage information is first beam coverage information, and the method further comprises:
receiving, by the terminal device, second beam coverage information of a second network device from the first network device.

9. The method according to claim 1, wherein the beam coverage information comprises a parameter related to a beam scanning pattern of the plurality of beams.

10. The method according to claim 9, wherein the parameter comprises at least one of the following:
shape information of the plurality of beams,
a quantity of longer-side beams in a rectangular coverage region of the plurality of beams,
a quantity of shorter-side beams in the rectangular coverage region,
a quantity of beams per circle present when the beam scanning pattern is circular scanning,
position information of a start beam,
a scanning manner of the plurality of beams, or
a beam coverage radius or a beam coverage diameter of the plurality of beams.

11. The method according to claim 10, further comprising at least one of the following:
based on determining that the parameter comprises the beam coverage radius or the beam coverage diameter, determining, by the terminal device, a to-be-measured beam based on the beam coverage radius or the beam coverage diameter; or
based on determining that the parameter does not comprise the beam coverage radius or the beam coverage diameter, determining, by the terminal device, the to-be-measured beam based on a beam selected in an access procedure.

12. The method according to claim 1, further comprising:
sending, by the terminal device, a measurement result of the radio resource management measurement to the network device.

13. The method according to claim 1, further comprising:
performing, by the terminal device based on the beam coverage, random access to the network device.

14. The method according to claim 13, wherein performing the random access comprises:
determining, by the terminal device based on the beam coverage, a covering beam that covers the terminal device; and
sending, by the terminal device, a random access request to the network device on a random access occasion corresponding to the covering beam.

15. The method according to claim 13, wherein performing the random access comprises:
determining, by the terminal device, a plurality of beams corresponding to the beam coverage;
and
sending, by the terminal device, a random access request to the network device on a plurality of random access occasions corresponding to the plurality of beams.

16. The method according to claim 14, further comprising:
if the covering beam fails when the random access request is initiated, obtaining, by the terminal device, a new covering beam.

17. A communication method, comprising:
determining, by a network device, beam coverage information of the network device, wherein the beam coverage information is used to determine spatial coverage of a plurality of beams; and
sending, by the network device, the beam coverage information to a terminal device.

18. The method according to claim 17, wherein the beam coverage information comprises at least one of the following:
a scanning sequence of the spatial coverage of the plurality of beams,
a geographic region covered by the spatial coverage of the plurality of beams,
a spatial filtering parameter of the spatial coverage of the plurality of beams, or
shape information of the spatial coverage of the plurality of beams.

19. The method according to claim 17, wherein the beam coverage information comprises at least one of the following:
a beam coverage radius or a beam coverage diameter of the plurality of beams,
a beam center point and/or a beam center angle of the plurality of beams, or
beam coverage angle information of the plurality of beams.

20. The method according to claim 19, wherein the coverage angle information comprises at least one of the following:
a beam coverage angle of the beam projected onto the ground,
a beam coverage angle of the beam projected onto a reference plane at a predetermined height,
or
a beam angle or a beamwidth angle of the beam present when the beam is sent from the network device.

21. The method according to claim 17, further comprising:
determining, by the network device, a beam measurement time window configuration, wherein the measurement time window configuration indicates a measurement periodicity and duration for the radio resource management measurement performed by the terminal device; and
sending, by the network device, the beam measurement time window configuration to the terminal device.

22. The method according to claim 17, wherein the network device is a first network device, the beam coverage information is first beam coverage information, and the method further comprises:
sending, by the first network device, second beam coverage information of a second network device to the terminal device.

23. The method according to claim 17, wherein the beam coverage information comprises a parameter related to a beam scanning pattern of the plurality of beams.

24. The method according to claim 23, wherein the parameter comprises at least one of the following:
shape information of the plurality of beams,
a quantity of longer-side beams in a rectangular coverage region of the plurality of beams,
a quantity of shorter-side beams in the rectangular coverage region,
a quantity of beams per circle present when the beam scanning pattern is circular scanning,
position information of a start beam,
a scanning manner of the plurality of beams, or
a beam coverage radius or a beam coverage diameter of the plurality of beams.

25. The method according to claim 17, further comprising:
receiving, by the network device, a measurement result of the radio resource management measurement from the terminal device; and
sending, by the network device to the terminal device based on the measurement result, an indication of performing beam switching.

26. The method according to claim 17, further comprising:
receiving, by the network device, a random access request from the terminal device, wherein the random access request is transmitted on a random access occasion that corresponds to one or more beams corresponding to the beam coverage.

27. A communication apparatus, comprising a processor and a memory storing instructions, wherein when the instructions are executed by the processor, the communication apparatus is enabled to perform the method according to any one of claims 1 to 16 or any one of claims 17 to 26.

28. A chip, wherein the chip comprises a processing circuit, and the processing circuit is configured to perform the method according to any one of claims 1 to 16 or according to any one of claims 17 to 26.

29. A computer-readable storage medium, wherein the computer-readable storage medium stores instructions, and when the instructions are executed by a communication device, the communication device is enabled to perform the method according to any one of claims 1 to 16 or any one of claims 17 to 26.
